# EUROPEAN PATENT APPLICATION

(11) **EP 4 482 195 A1**
(43) Date of publication of application: **25.12.2024**
(21) Application number: 23752234.7
(22) Date of filing: 16.01.2023
(51) Int. Cl.: H04W 24/02, H04W 28/02

(54) **MODEL MONITORING METHOD, MONITORING END, DEVICE, AND STORAGE MEDIUM**

(30) Priority: 14.02.2022 CN 202210134750
(71) Applicant: Datang Mobile Communications Equipment Co., Ltd., Beijing 100085 (CN)
(72) Inventor: SHU, Min, Beijing 100085 (CN)
(74) Representative: Studio Torta S.p.A.
(86) International application number: PCT/CN2023/072394
(87) International publication number: WO 2023/151454

(57) **Abstract**

Embodiments of the present disclosure provide a model monitoring method, a monitoring end, a device, and a storage medium. The method comprises: obtaining model related information of a first target model; and obtaining a model performance prediction analysis result on the basis of the model related information, wherein the model performance prediction analysis result is used for indicating whether to update the first target model. According to the embodiments of the present disclosure, the model related information of the first target model is obtained, a first monitoring end can obtain a model performance prediction analysis result on the basis of the model related information, and the model performance prediction analysis result is used for indicating the basis of whether to update the first target model, so that the performance of the model can be actively monitor, the performance trend of the model can be analyzed, and then the model can be updated in time when the performance of the model is degraded.

## Description

### CROSS-REFERENCES TO RELATED APPLICATIONS

The present application claims priority to Chinese patent application No. 2022101347502 filed on February 14, 2020, entitled "Model Monitoring Method, Monitoring End, Device, and Storage Medium", which is hereby incorporated by reference in its entirety.

### FIELD

The present application relates to the field of radio communication, and in particular, to methods and apparatuses for model monitoring, monitoring ends, and a storage medium.

### BACKGROUND

Due to the limitations of artificial intelligence (AI) technology, such as the problem of data quality, model decay, data locality, or the case of changes in certain functions due to other functions, the performance of machine learning (ML) models may decrease over time.

In traditional mobile communication systems, ML model training may be initiated by ML model training (MLMT) management service (MnS) producers, which is a passive model training/update triggered by management data analysis service (MDAS) consumers, and cannot accurately reflect the performance trend and degradation of a model.

### BRIEF SUMMARY

In response to the problems in the related art, embodiments of the present application provide methods and apparatuses for model monitoring, monitoring ends, and a storage medium.

An embodiment of the present application provides a method for model monitoring, applied to a first monitoring end, including:
obtaining model association information of a first target model; and
obtaining a model performance prediction analysis result based on the model association information, where the model performance prediction analysis result is used for indicating whether to update the first target model.

In an embodiment, the method further includes:
in case of satisfying a first given condition, obtaining the model performance prediction analysis result based on the model association information,
where the first given condition is any one of the following:
   a target trigger event occurs; or
   a first model performance monitoring timer expires; or
   there is a new training data.

In an embodiment, obtaining the model association information of the first target model includes:
collecting the model association information from one or more target network elements, where the target network element is deployed with the first target model.

In an embodiment, obtaining the model association information of the first target model includes:
requesting the model association information from a target service, where the target service is used for collecting the model association information from one or more target network elements, where the target network element is deployed with the first target model.

In an embodiment, the method further includes:
in case of satisfying a second given condition, requesting the model association information from the target service,
where the second given condition is any one of the following:
   a target trigger event occurs; or
   a second model performance monitoring timer expires; or
   there is a new training data; or
   model association information is not in local; or
   historical model association information is not stored in local.

In an embodiment, determining that the target trigger event occurs includes:
receiving a model performance analysis request message transmitted from a second monitoring end,
where the model performance analysis request message includes any one or more of the following:
   a model analysis type; or
   a model performance analysis type; or
   configuration information of the first target model; or
   a geographic location; or
   a target analysis object; or
   a request identifier; or
   a reporting method; or
   an identifier of a function module.

In an embodiment, the model association information includes any one or more of the following:
model performance information of the target network element; or
service statistics information of the target network element; or
quality of experience for user service of the target network element; or
a model association log of the target network element.

In an embodiment, the target network element is any one of the following:
a network functional entity; or
a network slicing instance (NSI); or
a network slicing subnet instance (NSSI); or
a network entity; or
a subnet entity; or
a network management entity.

In an embodiment, the model performance information includes any one or more of the following:
model accuracy; or
model precision; or
model recall; or
a harmonic value of model precision and model recall; or
a receiver operating characteristic (ROC) curve; or
an indicator associated with model operation; or
a model confidence level; or
a model confidence interval.

In an embodiment, the service statistics information includes any one or more of the following:
a number of model service requests; or
a number of model service responses; or
a number of successful subscriptions; or
a number of subscription failures; or
a number of notifications; or
a model service request time stamp; or
a model service response time stamp; or
a corresponding duration of a service request.

In an embodiment, the model performance prediction analysis result includes any one or more of the following:
the model association information; or
first indication information used for indicating whether to update the first target model; or
a second target model recommended for updating the first target model.

In an embodiment, in case that the model performance prediction analysis result includes the second target model, obtaining the model performance prediction analysis result based on the model association information includes:
determining a third target model as the second target model, where the third target model is an item in a given model library.

In an embodiment, the third target model satisfies any one or more of the following:
a performance indicator of the third target model is better than a performance indicator of the first target model; or
a performance indicator of the third target model exceeds a first threshold; or
a performance indicator of the third target model is a best in the given model library.

In an embodiment, the method further includes:
determining to update the first target model based on the model association information; and
transmitting the model performance prediction analysis result to the second monitoring end, where the first indication information in the model performance prediction analysis result is used for indicating to update the first target model.

In an embodiment, the method further includes:
transmitting the model performance prediction analysis result to the second monitoring end, where the model performance prediction analysis result is used for indicating the second monitoring end whether to update the first target model.

In an embodiment, the method further includes:
determining to update the first target model based on the model association information; and
transmitting first request information to a machine learning model training end, where the first request information is used for requesting to retrain the first target model to obtain a fourth target model.

In an embodiment, determining to update the first target model includes:
determining a fifth target model used for updating the first target model; and
updating the first target model based on the fifth target model.

In an embodiment, determining the fifth target model used for updating the first target model includes:
receiving the fourth target model transmitted from the machine learning model training end; and
in case it is determined that the fourth target model satisfies a third given condition, determining the fourth target model as the fifth target model,
where it is determined that the fourth target model satisfies the third given condition includes any one or more of the following:
   determining that a performance indicator of the fourth target model is better than a performance indicator of the first target model; or
   determining that a performance indicator of the fourth target model exceeds a second threshold.

In an embodiment, determining the fifth target model used for updating the first target model includes:
determining the second target model as the fifth target model.

An embodiment of the present application further provides a method for model monitoring, applied to a second monitoring end, including:
receiving model performance prediction analysis result of a first target model transmitted from a first monitoring end,
where the model performance prediction analysis result is used for indicating whether to update the first target model.

In an embodiment, the model performance prediction analysis result includes any one or more of the following:
model association information; or
first indication information used for indicating whether to update the first target model; or
a second target model recommended for updating the first target model.

In an embodiment, the method further includes:
determining to update the first target model based on the model association information in the model performance prediction analysis result.

In an embodiment, the method further includes:
determining to update the first target model based on the first indication information in the model performance prediction analysis result.

In an embodiment, the method further includes:
transmitting a second request information to a machine learning model training end, where the second request information is used for requesting to retrain the first target model to obtain a fourth target model.

In an embodiment, determining to update the first target model includes:
determining a fifth target model used for updating the first target model; and
updating the first target model based on the fifth target model.

In an embodiment, determining the fifth target model used for updating the first target model includes:
receiving the fourth target model transmitted from the machine learning model training end; and
in case it is determined that the fourth target model satisfies a third given condition, determining the fourth target model as the fifth target model,
where it is determined that the fourth target model satisfies the third given condition includes any one or more of the following:
   determining that a performance indicator of the fourth target model is better than a performance indicator of the first target model; or
   determining that a performance indicator of the fourth target model exceeds a second threshold.

In an embodiment, determining the fifth target model used for updating the first target model includes:
determining the second target model as the fifth target model.

An embodiment of the present application further provides a first monitoring end, including a memory, a transceiver, and a processor, where:
the memory is used for storing a computer program; the transceiver is used for transmitting and receiving data under control of the processor; and the processor is used for reading the computer program in the memory and performing the following operations:
obtaining model association information of a first target model; and
obtaining model performance prediction analysis result based on the model association information, where the model performance prediction analysis result is used for indicating whether to update the first target model.

In an embodiment, the operations further include:
in case of satisfying a first given condition, obtaining the model performance prediction analysis result based on the model association information,
where the first given condition is any one of the following:
   a target trigger event occurs; or
   a first model performance monitoring timer expires; or
   there is a new training data.

In an embodiment, obtaining the model association information of the first target model includes:
collecting the model association information from one or more target network elements, where the target network element is deployed with the first target model.

In an embodiment, obtaining the model association information of the first target model includes:
requesting the model association information from a target service, where the target service is used for collecting the model association information from one or more target network elements, where the target network element is deployed with the first target model.

In an embodiment, the operations further include:
in case of satisfying a second given condition, determining to request the model association information from the target service;
the second given condition is any one of the following:
   a target trigger event occurs; or
   a second model performance monitoring timer expires; or
   there is a new training data; or
   there is no model association information locally; or
   historical model association information is not stored locally.

In an embodiment, determining that the target trigger event occurs includes:
receiving a model performance analysis request message transmitted from a second monitoring end,
where the model performance analysis request message includes any one or more of the following:
   a model analysis type; or
   a model performance analysis type; or
   configuration information of the first target model; or
   a geographic location; or
   a target analysis object; or
   an identifier of a reporting request; or
   a reporting method; or
   an identifier of a function module.

In an embodiment, the model association information includes any one or more of the following:
model performance information of the target network element; or
service statistics information of the target network element; or
quality of experience for user service of the target network element; or
a model association log of the target network element.

In an embodiment, the target network element is any one of the following:
a network functional entity; or
a network slicing instance (NSI); or
a network slicing subnet instance (NSSI); or
a network entity; or
a subnet entity; or
a network management entity.

In an embodiment, the model performance information includes any one or more of the following:
model accuracy; or
model precision; or
model recall; or
a harmonic value of model precision and model recall; or
a receiver operating characteristic (ROC) curve; or
an indicator related to model operation; or
a confidence level of a model; or
a confidence interval of a model.

In an embodiment, the service statistics information includes any one or more of the following:
a number of model service requests; or
a number of model service responses; or
a number of successful subscriptions; or
a number of failing subscriptions; or
a number of notifications; or
a model service request time stamp; or
a model service response time stamp; or
a corresponding duration of a service request.

In an embodiment, the model performance prediction analysis result includes any one or more of the following:
the model association information; or
first indication information used for indicating whether to update the first target model; or
a second target model recommended for updating the first target model.

In an embodiment, in case that the model performance prediction analysis result includes the second target model, obtaining model performance prediction analysis result based on the model association information includes:
determining a third target model as the second target model, where the third target model is an item in a preset model library.

In an embodiment, the third target model satisfies any one or more of the following:
a performance indicator of the third target model is better than a performance indicator of the first target model; or
a performance indicator of the third target model exceeds a first threshold; or
a performance indicator of the third target model is a best in the preset model library.

In an embodiment, the operations further include:
determining to update the first target model based on the model association information; and
transmitting the model performance prediction analysis result to the second monitoring end, where the first indication information in the model performance prediction analysis result is used for indicating to update the first target model.

In an embodiment, the operations further include:
transmitting the model performance prediction analysis result to the second monitoring end, where the model performance prediction analysis result is used for indicating the second monitoring end whether to update the first target model.

In an embodiment, the operations further include:
determining to update the first target model based on the model association information; and
transmitting first request information to a machine learning model training end, where the first request information is used for requesting to retrain the first target model to obtain a fourth target model.

In an embodiment, determining to update the first target model includes:
determining a fifth target model used for updating the first target model; and
updating the first target model based on the fifth target model.

In an embodiment, determining the fifth target model used for updating the first target model includes:
receiving the fourth target model transmitted from the machine learning model training end; and
in case it is determined that the fourth target model satisfies a third given condition, determining the fourth target model as the fifth target model,
where it is determined that the fourth target model satisfies the third given condition includes any one or more of the following:
   determining that a performance indicator of the fourth target model is better than a performance indicator of the first target model; or
   determining that a performance indicator of the fourth target model exceeds a second threshold.

In an embodiment, determining the fifth target model used for updating the first target model includes:
determining the second target model as the fifth target model.

An embodiment of the present application further provides a second monitoring end, including a memory, a transceiver, and a processor, where:
the memory is used for storing a computer program; the transceiver is used for transmitting and receiving data under control of the processor; and the processor is used for reading the computer program from the memory and performing the following operations:
receiving model performance prediction analysis result of a first target model transmitted from a first monitoring end;
where the model performance prediction analysis result is used for indicating whether to update the first target model.

In an embodiment, the model performance prediction analysis result includes any one or more of the following:
model association information; or
first indication information used for indicating whether to update the first target model; or
a second target model recommended for updating the first target model.

In an embodiment, the operations further include:
determining to update the first target model based on the model association information in the model performance prediction analysis result.

In an embodiment, the operations further include:
determining to update the first target model based on the first indication information in the model performance prediction analysis result.

In an embodiment, the operations further include:
transmitting a second request information to a machine learning model training end, where the second request information is used for requesting to retrain the first target model to obtain a fourth target model.

In an embodiment, after determining to update the first target model, determining to update the first target model includes:
determining a fifth target model used for updating the first target model; and
updating the first target model based on the fifth target model.

In an embodiment, determining the fifth target model used for updating the first target model includes:
receiving the fourth target model transmitted from the machine learning model training end; and
in case it is determined that the fourth target model satisfies a third given condition, determining the fourth target model as the fifth target model,
where it is determined that the fourth target model satisfies the third given condition includes any one or more of the following:
   determining that a performance indicator of the fourth target model is better than a performance indicator of the first target model; or
   determining that a performance indicator of the fourth target model exceeds a second threshold.

In an embodiment, determining the fifth target model used for updating the first target model includes:
determining the second target model as the fifth target model.

An embodiment of the present application further provides an apparatus for model monitoring, applied to a first monitoring end, including:
a first obtaining unit, used for obtaining model association information of a first target model;
a second obtaining unit, used for obtaining model performance prediction analysis result based on the model association information, where the model performance prediction analysis result is used for indicating whether to update the first target model.

In an embodiment, the apparatus further includes a first determination unit used for:
in case of satisfying a first given condition, obtaining the model performance prediction analysis result based on the model association information,
where the first given condition is any one of the following:
   a target trigger event occurs; or
   a first model performance monitoring timer expires; or
   there is a new training data.

In an embodiment, the first obtaining unit is further used for:
collecting the model association information from one or more target network elements, where the target network element is deployed with the first target model.

In an embodiment, the first obtaining unit is further used for:
requesting the model association information from a target service, where the target service is used for collecting the model association information from one or more target network elements, where the target network element is deployed with the first target model.

In an embodiment, the apparatus further includes a second determination unit used for:
in case of satisfying a second given condition, determining to request the model association information from the target service;
the second given condition is any one of the following:
   a target trigger event occurs; or
   a second model performance monitoring timer expires; or
   there is a new training data; or
   there is no model association information locally; or
   historical model association information is not stored locally.

In an embodiment, the first determining unit is further used for:
receiving a model performance analysis request message transmitted from a second monitoring end,
where the model performance analysis request message includes any one or more of the following:
   a model analysis type; or
   a model performance analysis type; or
   configuration information of the first target model; or
   a geographic location; or
   a target analysis object; or
   an identifier of a reporting request; or
   a reporting method; or
   an identifier of a function module.

In an embodiment, the model association information includes any one or more of the following:
model performance information of the target network element; or
service statistics information of the target network element; or
quality of experience for user service of the target network element; or
a model association log of the target network element.

In an embodiment, the target network element is any one of the following:
a network functional entity; or
a network slicing instance (NSI); or
a network slicing subnet instance (NSSI); or
a network entity; or
a subnet entity; or
a network management entity.

In an embodiment, the model performance information includes any one or more of the following:
model accuracy; or
model precision; or
model recall; or
a harmonic value of model precision and model recall; or
a receiver operating characteristic (ROC) curve; or
an indicator related to model operation; or
a confidence level of a model; or
a confidence interval of a model.

In an embodiment, the service statistics information includes any one or more of the following:
a number of model service requests; or
a number of model service responses; or
a number of successful subscriptions; or
a number of failing subscriptions; or
a number of notifications; or
a model service request time stamp; or
a model service response time stamp; or
a corresponding duration of a service request.

In an embodiment, the model performance prediction analysis result includes any one or more of the following:
the model association information; or
first indication information used for indicating whether to update the first target model; or
a second target model recommended for updating the first target model.

In an embodiment, in case that the model performance prediction analysis result includes the second target model, the second obtaining unit is further used for:
determining a third target model as the second target model, where the third target model is an item in a preset model library.

In an embodiment, the third target model satisfies any one or more of the following:
a performance indicator of the third target model is better than a performance indicator of the first target model; or
a performance indicator of the third target model exceeds a first threshold; or
a performance indicator of the third target model is a best in the preset model library.

In an embodiment, the apparatus further includes a third determination unit used for:
determining to update the first target model based on the model association information; and
transmitting the model performance prediction analysis result to the second monitoring end, where the first indication information in the model performance prediction analysis result is used for indicating to update the first target model.

In an embodiment, the apparatus further includes a first transmission unit used for:
transmitting the model performance prediction analysis result to the second monitoring end, where the model performance prediction analysis result is used for indicating the second monitoring end whether to update the first target model.

In an embodiment, the apparatus further includes a fourth determination unit used for:
determining to update the first target model based on the model association information; and
transmitting first request information to a machine learning model training end, where the first request information is used for requesting to retrain the first target model to obtain a fourth target model.

In an embodiment, the apparatus further includes a fifth determination unit used for:
determining a fifth target model used for updating the first target model; and
updating the first target model based on the fifth target model.

In an embodiment, the fifth determination unit is further used for:
receiving the fourth target model transmitted from the machine learning model training end; and
in case it is determined that the fourth target model satisfies a third given condition, determining the fourth target model as the fifth target model,
where it is determined that the fourth target model satisfies the third given condition includes any one or more of the following:
   determining that a performance indicator of the fourth target model is better than a performance indicator of the first target model; or
   determining that a performance indicator of the fourth target model exceeds a second threshold.

In an embodiment, the fifth determination unit is further used for:
determining the second target model as the fifth target model.

An embodiment of the present application further provides an apparatus for model monitoring, applied to a second monitoring end, including:
a reception unit, used for receiving model performance prediction analysis result of a first target model transmitted from a first monitoring end,
where the model performance prediction analysis result is used for indicating whether to update the first target model.

In an embodiment, the model performance prediction analysis result includes any one or more of the following:
model association information; or
first indication information used for indicating whether to update the first target model; or
a second target model recommended for updating the first target model.

In an embodiment, the apparatus further includes a sixth determination unit used for:
determining to update the first target model based on the model association information in the model performance prediction analysis result.

In an embodiment, the apparatus further includes a seventh determination unit used for:
determining to update the first target model based on the first indication information in the model performance prediction analysis result.

In an embodiment, the apparatus further includes a second transmission unit used for:
transmitting a second request information to a machine learning model training end, where the second request information is used for requesting to retrain the first target model to obtain a fourth target model.

In an embodiment, the apparatus further includes an eighth determination unit used for:
determining a fifth target model used for updating the first target model; and
updating the first target model based on the fifth target model.

In an embodiment, the eighth determination unit is further used for:
receiving the fourth target model transmitted from the machine learning model training end; and
in case it is determined that the fourth target model satisfies a third given condition, determining the fourth target model as the fifth target model,
where it is determined that the fourth target model satisfies the third given condition includes any one or more of the following:
   determining that a performance indicator of the fourth target model is better than a performance indicator of the first target model; or
   determining that a performance indicator of the fourth target model exceeds a second threshold.

In an embodiment, the eighth determination unit is further used for:
determining the second target model as the fifth target model.

An embodiment of the present application further provides a processor-readable storage medium, where the processor-readable storage medium stores a computer program for causing a processor to perform steps of any of the methods for model monitoring described above.

In the methods and apparatuses for model monitoring, monitoring ends, and the storage medium provided by the embodiments of the present application, the model association information of the first target model is obtained, and the first monitoring end may obtain the model performance prediction analysis result based on the model association information, where the model performance prediction analysis result is used for indicating whether to update the first target model. As such, the model performance is actively monitored, model performance trend is analyzed, and the model is updated in a timely manner in the event of a decrease in model performance.

### BRIEF DESCRIPTION OF THE DRAWINGS

To illustrate the solutions disclosed in the embodiments of the present application or in the related art more clearly, the drawings used in the description of the embodiments or the related art are briefly described below. The drawings in the following description are only some embodiments of the present application, and other drawings may be obtained according to these drawings without any creative effort for those skilled in the art.
FIG. 1 is a schematic diagram of management data analytics (MDA) function and service framework provided in the related art;
FIG. 2 is a schematic diagram of data analytics service collaboration provided in the related art;
FIG. 3 is a schematic flowchart of MDA analytics request provided in the related art;
FIG. 4 is a schematic flowchart of model training provided in the related art;
FIG. 5 is a first schematic flowchart of a method for model monitoring according to an embodiment of the present application;
FIG. 6 is a second schematic flowchart of a method for model monitoring according to an embodiment of the present application;
FIG. 7 is a third schematic flowchart of a method for model monitoring according to an embodiment of the present application;
FIG. 8 is a fourth schematic flowchart of a method for model monitoring according to an embodiment of the present application;
FIG. 9 is a fifth schematic flowchart of a method for model monitoring according to an embodiment of the present application;
FIG. 10 is a schematic structural diagram of a first monitoring end according to an embodiment of the present application;
FIG. 11 is a schematic structural diagram of a second monitoring end according to an embodiment of the present application;
FIG. 12 is a first schematic structural diagram of an apparatus for model monitoring according to an embodiment of the present application; and
FIG. 13 is a second schematic structural diagram of an apparatus for model monitoring according to an embodiment of the present application.

### DETAILED DESCRIPTION

To facilitate a clearer understanding of the various embodiments in the present application, relevant background knowledge is first introduced as follows.

Artificial intelligence (AI) or machine learning (ML) functions are being used in increasing fields of 5G, including management and orchestration, such as management data analytics (MDA), 5G core (5GC), such as network data analytics function (NWDAF), and next generation radio access network (NG-RAN). To implement and enable AI/ML, it is necessary to create an AI/ML model and manage it throughout the entire life cycle, such as validating, testing, and deploying the AI/ML model, etc.

### (1) Management data analytics (MDA) function and service framework

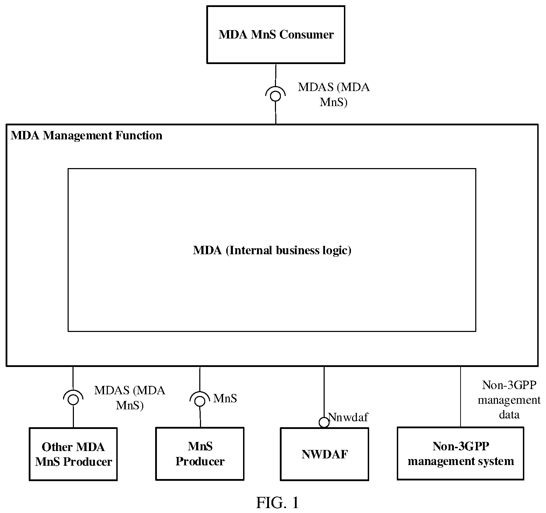

FIG. 1 is a schematic diagram of MDA function and service framework provided in the related art. As shown in FIG. 1, in a mobile communication system, any granted consumer is allowed to request and receive analysis. The MDA management function (MDA service, MDAS) may play the role of MDA management service (MnS) producers, MDA MnS consumers, other MnS consumers, or NWDAF consumers, and interact with other non-3GPP (3rd generation partnership project) management systems.

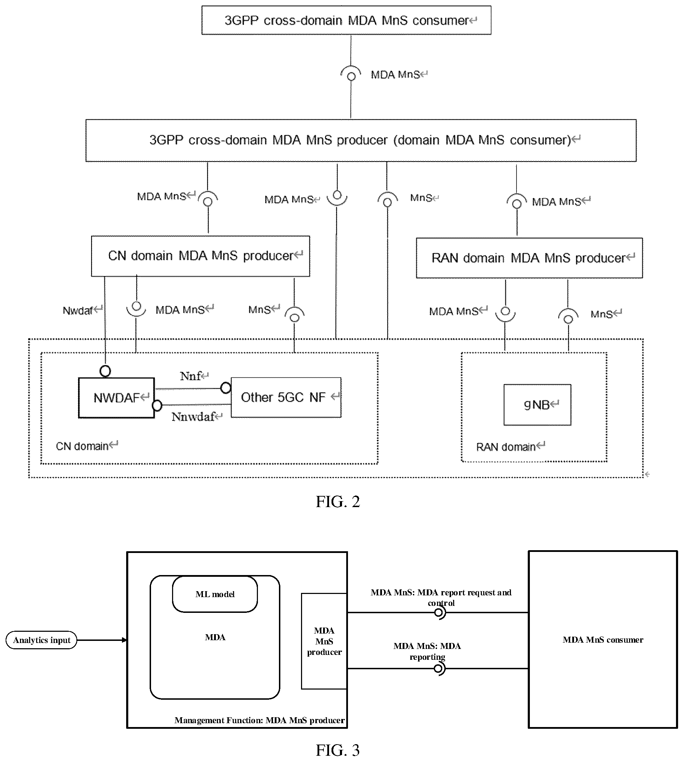

FIG. 2 is a schematic diagram of data analytics service collaboration provided in the related art. As shown in FIG. 2, the MDA management function may be used as domain-specific (such as radio access network (RAN) or a core network (CN)) or as cross-domain in 3GPP. As shown in FIG. 2, an example of coordination among NWDAF, next generation node B (gNB), and MDA MnS producer(s) for data analytics purposes is illustrated.

### (2) MDA analytics request procedure

FIG. 3 is a schematic flowchart of MDA analytics request provided in the related art. As shown in FIG. 3, the MDA analytics request procedure may include step 301 to step 304:
step 301, an MDA MnS producer collects an analytics input;
step 302, an MDA MnS consumer requests an MDA report and controls the MDA report of the MDA MnS producer;
step 303, the MDA MnS producer processes the analytics input of MDA based on the inference of a (trained) ML model and generates an analytics/inference output; and
step 304, the MnS producer generates the MDA report based on the analytics/inference output and provides the MDA report to the MDA MnS consumer.

### (3) Model training procedure

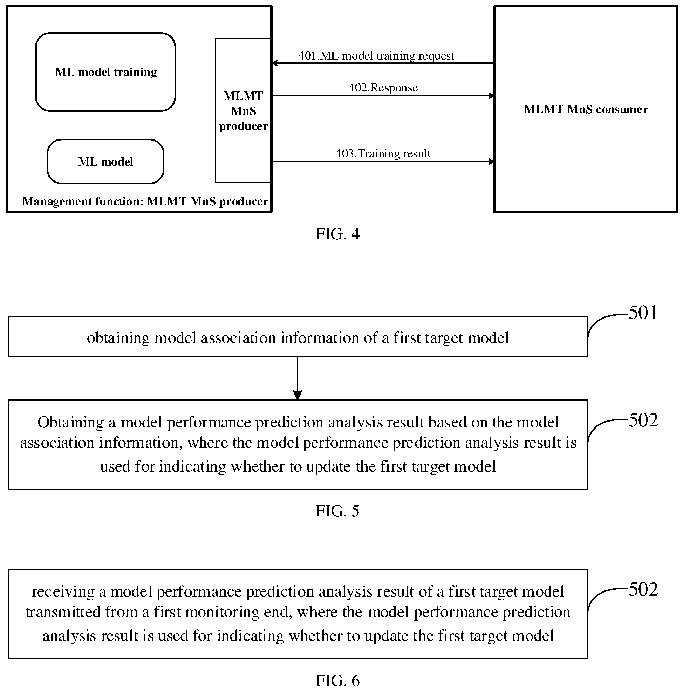

FIG. 4 is a schematic flowchart of model training provided in the related art. As shown in FIG. 4, an interaction procedure between MDA and a user may include step 401 to step 403.

Step 401, an ML model training (MLMT) MnS consumer requests an MLMT MnS producer to train an ML model;
where the MLMT MnS consumer may provide a data source containing training data in a request message, where the training data is considered as a candidate input for training;
step 402, the MLMT MnS producer transmits a request acknowledgment message (Response) to the MLMT MnS consumer; and
step 403, after selecting appropriate training data, the MLMT MnS producer starts model training and provides an ML model training report.

To overcome above shortcomings, embodiments of the present application provide methods and apparatuses for model monitoring, monitoring ends, and a storage medium. By obtaining a model performance prediction analysis result based on the model association information, active monitoring of the model performance may be achieved.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative effort belong to the scope of the present application.

The solutions according to the embodiments of the present application may be applicable to various systems, particular to 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

FIG. 5 is a first schematic flowchart of a method for model monitoring according to an embodiment of the present application. As shown in FIG. 5, an embodiment of the present application provides a method for model monitoring, which may be performed by a first monitoring end. The method includes:
step 501, obtaining model association information of a first target model; and
step 502, obtaining a model performance prediction analysis result based on the model association information, where the model performance prediction analysis result is used for indicating whether to update the first target model.

In an embodiment, the first monitoring end obtains the model association information of the first target model, and then may analyze the first target model based on the model association information, to obtain the model performance prediction analysis result.

In an embodiment, the first monitoring end may be an MDAS or an MDAS producer.

The model performance prediction analysis result is used for indicating whether to update the first target model. The first monitoring end may determine whether to initiate a request to retrain the first target model based on the model performance prediction analysis result. In case that it is determined to initiate the request to retrain the first target model, a machine learning model training end may be requested to retrain the first target model. The obtained training result may be used to update the first target model, to actively monitor the model performance, analyze the model performance trend, and initiate model training, where the training result may be used to update the model.

The model performance prediction analysis result is used for indicating whether to update the first target model, and then the first monitoring end may transmit the model performance prediction analysis result to other monitoring ends (such as a second monitoring end). Other monitoring ends may determine whether to initiate a request to retrain the first target model based on the model performance prediction analysis result. In case that it is determined to initiate the request to retrain the first target model, other monitoring ends may transmit the request to the machine learning model training end to retrain the first target model. The obtained training result may be used to update the first target model, so as to actively monitor the model performance, analyze the model performance trend, and initiate model training, where the training result may be used to update the model.

In the method for model monitoring provided by the embodiments of the present application, by obtaining model association information of the first target model, the first monitoring end obtains the model performance prediction analysis result based on the model association information, where the model performance prediction analysis result is used for indicating whether to update the first target model. As such, active monitoring of the model performance and analysis of the model performance trend may be achieved, and the model may be updated in a timely manner when the model performance decreases.

In an embodiment, the method further includes:
in case of satisfying a first given condition, obtaining the model performance prediction analysis result based on the model association information,
where the first given condition is any one of the following:
   a target trigger event occurs; or
   a first model performance monitoring timer expires; or
   there is a new training data.

In an embodiment, the first monitoring end may determine whether the first given condition is satisfied. In case that the first given condition is satisfied, the first monitoring end may obtain the model performance prediction analysis result based on the model association information.

In an embodiment, the first monitoring end may determine whether the first given condition is satisfied before obtaining the model association information of the first target model. In case that it is determined that the first given condition is satisfied, the model association information of the first target model may be obtained, and the model performance prediction analysis result may be obtained based on the model association information.

In an embodiment, the first monitoring end may determine whether the first given condition is satisfied after obtaining the model association information of the first target model and before obtaining the model performance prediction analysis result based on the model association information. In case that it is determined that the first given condition is satisfied, the model performance prediction analysis result may be obtained based on the model association information.

In an embodiment, the first given condition may be that the target trigger event occurs, and the first monitoring end may determine to obtain the model performance prediction analysis result based on the model association information in case that it is determined that the target trigger event occurs.

In an embodiment, the first given condition may be that the first model performance monitoring timer expires, and the first monitoring end may determine to obtain the model performance prediction analysis result based on the model association information in case that it is determined that the first model performance monitoring timer expires.

In an embodiment, the first given condition may be that there is the new training data, and the first monitoring end may determine to obtain the model performance prediction analysis result based on the model association information in case that it is determined that there is the new training data.

Therefore, in case of satisfying the first given condition, the first monitoring end may determine to obtain the model performance prediction analysis result based on the model association information, which may actively monitor the model performance, analyze the model performance trend, and update the model in a timely manner when the model performance decreases.

In an embodiment, obtaining the model association information of the first target model includes:
collecting the model association information from one or more target network elements, where the target network element is deployed with the first target model.

In an embodiment, the first monitoring end may collect the model association information from one or more target network elements, and obtain the model performance prediction analysis result based on the model association information.

In an embodiment, the first monitoring end may continuously collect the model association information from one target network element, and obtain the model performance prediction analysis result based on the model association information.

In an embodiment, the first monitoring end may continuously collect the model association information from two or more target network elements, and obtain the model performance prediction analysis result based on the model association information.

In an embodiment, the first monitoring end may periodically collect the model association information from one or more target network elements based on a collection interval configuration.

For example, the collection interval configuration may be 15 minutes, and the first monitoring end may perform the operation of collecting the model association information from one or more target network elements every 15 minutes.

For example, the collection interval configuration may be 30 minutes, and the first monitoring end may perform the operation of collecting the model association information from one or more target network elements every 30 minutes.

For example, the collection interval configuration may be 60 minutes, and the first monitoring end may perform the operation of collecting the model association information from one or more target network elements every 60 minutes.

In an embodiment, the target network element may be an AI-enabled functional entity, and the first monitoring end may collect the model association information from one or more AI-enabled functional entities, such as MDA, NWDAF, or RAN, where the model association information may include: model performance information, service statistics information, such as a key performance indicator (KPI), quality of experience for user service, such as a quality of experience data (QoE Data), and a model association log.

In an embodiment, the target network element may be a model deployed with the first target model, and the first monitoring end may obtain information about the first target model, that is, the model association information, from the target network element.

Therefore, the first monitoring end may obtain the model association information from one or more target network elements, and obtain the model performance prediction analysis result based on the model association information, which may actively monitor the model performance, analyze the model performance trend, and update the model in a timely manner when the model performance decreases.

In an embodiment, obtaining the model association information of the first target model includes:
requesting the model association information from a target service, where the target service is used for collecting the model association information from one or more target network elements, and the target network element is deployed with the first target model.

In an embodiment, the first monitoring end may transmit a request message requesting model association information to the target service, to obtain the model association information, and then the model performance prediction analysis result may be obtained based on the model association information.

In an embodiment, the first monitoring end may transmit a request requesting model association information to the target service, to obtain the model association information from the target service, and then the model performance prediction analysis result may be obtained based on the model association information.

For example, the target service may be a performance measurement service. The first monitoring end may transmit a request message requesting the model association information to the performance measurement service, to obtain the model association information from the performance measurement service, and then the model performance prediction analysis result may be obtained based on the model association information.

In an embodiment, the first monitoring end may transmit a request to the target service to create a measurement job, so that the target service may create a measurement job. After the measurement job is created, the first monitoring end may obtain the model association information from one or more target network elements, and then the model performance prediction analysis result may be obtained based on the model association information, where the operation of creating the measurement job by the target service may enable one or more target network elements to collect information of the first target model.

For example, the target service may be a network function (NF) measurement job control service producer. The first monitoring end may transmit a request for creating measurement job to the NF measurement job control service producer. After the measurement job is created, the model association information may be obtained from one or more target network elements and then the model performance prediction analysis result may be obtained based on the model association information.

Therefore, the first monitoring end may request the model association information from the target service, and obtain the model performance prediction analysis result based on the model association information, which may actively monitor the model performance, analyze the model performance trend, and update the model in a timely manner when the model performance decreases.

In an embodiment, the method further includes:
in case of satisfying a second given condition, requesting the model association information from the target service,
where the second given condition is any one of the following:
   a target trigger event occurs; or
   a second model performance monitoring timer expires; or
   there is a new training data; or
   model association information is not in local; or
   historical model association information is not stored in local.

In an embodiment, before obtaining the model association information of the first target model, the first monitoring end may determine whether the second given condition is satisfied. In case that it is determined that the second given condition is satisfied, the first monitoring end may request the model association information from the target service.

In an embodiment, the second given condition may be that a target trigger event occurs, and the first monitoring end may determine to request the model association information from the target service in case it is determined that the target trigger event occurs.

In an embodiment, the second given condition may be that a second model performance monitoring timer expires, and the first monitoring end may determine to request the model association information from the target service in case it is determined that the second model performance monitoring timer expires.

In an embodiment, the first model performance monitoring timer and the second model performance monitoring timer may be the same timer.

In an embodiment, the first model performance monitoring timer and the second model performance monitoring timer may be different timers.

In an embodiment, the second given condition may be that there is a new training data, and the first monitoring end may determine to request the model association information from the target service in case it is determined that there is the new training data.

In an embodiment, the second given condition may be that model association information is not in local, and the first monitoring end may determine to request the model association information from the target service in case that the model association information is not in local.

In an embodiment, the second given condition may be that historical model association information is not stored in local, and the first monitoring end may determine to request the model association information from the target service in case that the historical model association information is not stored in local.

Therefore, the first monitoring end may request the model association information from the target service in case that the second given condition is satisfied, and then obtain the model performance prediction analysis result based on the model association information, which may actively monitor the model performance, analyze the model performance trend, and update the model in a timely manner when the model performance decreases.

In an embodiment, determining that the target trigger event occurs includes:
receiving a model performance analysis request message transmitted from a second monitoring end,
where the model performance analysis request message includes any one or more of the following:
   a model analysis type; or
   a model performance analysis type; or
   configuration information of the first target model; or
   a geographic location; or
   a target analysis object; or
   a request identifier; or
   a reporting method; or
   an identifier of a function module.

In an embodiment, before obtaining the model performance prediction analysis result based on the model association information, the first monitoring end may determine to obtain the model performance prediction analysis result based on the model association information in case of receiving the model performance analysis request message transmitted from the second monitoring end.

In an embodiment, before obtaining model association information of the first target model, the first monitoring end may determine to request the model association information from the target service in case of receiving the model performance analysis request message transmitted from the second monitoring end.

In an embodiment, the model performance analysis request message may include any one or more of the following:
a model analysis type; or
a model performance analysis type; or
configuration information of the first target model; or
a geographic location; or
a target analysis object; or
a request identifier; or
a reporting method; or
an identifier (ID) of a function module, used for indicating an ID of a function module where the model is located.

For example, the configuration information of the first target model may include: a model name, a model type, creation/end time, a parameter, status, a training data ID, etc.

For example, the reporting method may be any one of the following: a file-based reporting method, a stream-based reporting method, or a notification-based reporting method.

Therefore, in case of receiving a model performance analysis request message from the second monitoring end, the first monitoring end may obtain the model performance prediction analysis result based on the model association information, which may actively monitor the model performance, analyze the model performance trend, and update the model in a timely manner when the model performance decreases.

In an embodiment, the model association information includes any one or more of the following:
model performance information of the target network element; or
service statistics information of the target network element; or
quality of experience for user service of the target network element; or
a model association log of the target network element.

In an embodiment, the model association information may include one or more pieces of model information, and the first monitoring end may obtain the model association information of the first target model, and then the model performance prediction analysis result may be obtained based on the model association information.

In an embodiment, the model association information may include model performance statistics and a KPI.

In an embodiment, the model association information may include any one or more of the following:
performance information of the target network element; or
service statistics information of the target network element; or
quality of experience (QoE) for user service of the target network element; or
a model association log of the target network element.

In an embodiment, the service statistics information of the target network element may include a KPI.

In an embodiment, the QoE for user service may be used as a data for model training, and the QoE for user service may be used to represent that the performance of the model. For example, in case that the QoE for user service is poor, it is indicated that the performance of the service associated model is low.

In an embodiment, the data or the log of the model mentioned in various embodiments of the present application may refer to the data or the log of the service associated with the models.

Therefore, the model association information may include one or more pieces of model information. The first monitoring end may obtain the model performance prediction analysis result based on the model association information, which may actively monitor the model performance, analyze the model performance trend, and update the model in a timely manner in case that the model performance decreases.

In an embodiment, the target network element is any one of the following:
a network functional entity; or
a network slicing instance (NSI); or
a network slicing subnet instance (NSSI); or
a network entity; or
a subnet entity; or
a network management entity.

In an embodiment, in case that the target network element is a network functional entity, the model association information may include performance information of the network functional entity, service statistics information of the network functional entity, QoE for user service of the network functional entity, or a model association log of the network functional entity.

In an embodiment, in case that the target network element is an NSI, the model association information may include performance information of the NSI, service statistics information of the NSI, QoE for user service of the NSI, or a model association log of the NSI.

In an embodiment, in case that the target network element is an NSSI, the model association information may include performance information of the NSSI, service statistics information of the NSSI, QoE for user service of the NSSI, or a model association log of the NSSI.

In an embodiment, in case that the target network element is a network entity, the model association information may include performance information of the network entity, service statistics information of the network entity, QoE for user service of the network entity, or a model association log of the network entity.

In an embodiment, in case that the target network element is a sub-network entity, the model association information may include performance information of the sub-network entity, service statistics information of the sub-network entity, QoE for user service of the sub-network entity, or a model association log of the sub-network entity.

In an embodiment, in case that the target network element is a network management entity, the model association information may include performance information of the network management entity, service statistics information of the network management entity, QoE for user service of the network management entity, or a model association log of the network management entity.

Therefore, the model association information may include one or more pieces of model information. The first monitoring end may obtain the model performance prediction analysis result based on the model association information, which may actively monitor the model performance, analyze the model performance trend, and update the model in a timely manner in case that the model performance decreases.

In an embodiment, the model performance information includes any one or more of the following:
model accuracy; or
model precision; or
model recall; or
a harmonic value of model precision and model recall; or
a receiver operating characteristic (ROC) curve; or
an indicator associated with model operation; or
a model confidence level; or
a model confidence interval.

In an embodiment, the model performance information may include one or more pieces of performance information about the first target model, and the first monitoring end may obtain the model performance prediction analysis result based on the model performance information and other model association information.

In an embodiment, the model performance information may include any one or more of the following:
(1) model accuracy, including the number of positive and negative cases correctly predicted by the model and/or the total number of cases correctly predicted by the model; or
(2) model precision, including the number of positive cases correctly predicted by the model and/or the total number of positive cases predicted by the model; or
(3) model recall, including the number of positive cases correctly predicted by the model and/or the actual total number of positive cases predicted by the model; or
(4) an Fl score, where an F-value may be a harmonic value of precision and recall, which is closer to the smaller of the precision and recall, and in case that the precision and recall are close, the F-value is maximum; or
(5) a receiver operating characteristic (ROC) curve; or
(6) an indicator associated with model operation, such as network bandwidth, memory usage, CPU usage, response latency, etc.; or
(7) a model confidence level; or
(8) a model confidence interval.

For example, in case that model performance information includes model accuracy, model precision, and model recall, the first monitoring end may obtain the model performance prediction analysis result based on the model performance information and other model association information.

Therefore, the model association information may include one or more pieces of model information. The first monitoring end may obtain the model performance prediction analysis result based on the model association information, which may actively monitor the model performance, analyze the model performance trend, and update the model in a timely manner in case that the model performance decreases.

In an embodiment, the service statistics information includes any one or more of the following:
a number of model service requests; or
a number of model service responses; or
a number of successful subscriptions; or
a number of subscription failure; or
a number of notifications; or
a model service request time stamp; or
a model service response time stamp; or
a corresponding duration of a service request.

In an embodiment, the service statistics information may include one or more pieces of statistical information about the first target model. The first monitoring end may obtain the model performance prediction analysis result based on the service statistics information and other model association information.

In an embodiment, the service statistics information may include any one or more of the following:
(1) a number of model service requests/responses; or
(2) a number of successful subscriptions/subscription failure; or
(3) a number of notifications, etc.; or
(4) a model service request/response time stamp; or
(5) a corresponding duration of a service request.

For example, in case that the service statistics information includes the number of model service requests, the number of model service responses, the number of successful subscriptions, and the number of subscription failure, the first monitoring end may obtain the model performance prediction analysis result based on the service statistics information and other model association information.

Therefore, the model association information may include one or more pieces of model information. The first monitoring end may obtain the model performance prediction analysis result based on the model association information, which may actively monitor the model performance, analyze the model performance trend, and update the model in a timely manner in case that the model performance decreases.

In an embodiment, the model performance prediction analysis result includes any one or more of the following:
the model association information; or
first indication information used for indicating whether to update the first target model; or
a second target model recommended for updating the first target model.

In an embodiment, the first monitoring end obtains the model association information of the first target model, and obtains the model performance prediction analysis result based on the model association information, where the model performance prediction analysis result may include one or more analysis results.

For example, the model performance prediction analysis result may only include the model association information.

For example, the model performance prediction analysis result may include the model association information, the first indication information, or the second target model, etc.

Therefore, the model performance prediction analysis result may include one or more analysis results. The model performance prediction analysis result is used for indicating whether to update the first target model, which may achieve active monitoring of the model performance, analyzing the model performance trend, and updating the model in a timely manner when the model performance decreases.

In an embodiment, in case that the model performance prediction analysis result includes the second target model, obtaining the model performance prediction analysis result based on the model association information includes:
determining a third target model as the second target model, where the third target model is an item in a given model library.

In an embodiment, the first monitoring end may determine the third target model as the second target model, and then the second target model may be used as one of the model performance prediction analysis results.

Therefore, the first monitoring end may use the second target model as one of the model performance prediction analysis results, where the model performance prediction analysis result is used for indicating whether to update the first target model, which may achieve active monitoring of the model performance, analyzing the model performance trend, and updating the model in a timely manner when the model performance decreases.

In an embodiment, the third target model satisfies any one or more of the following:
a performance indicator of the third target model is better than a performance indicator of the first target model; or
a performance indicator of the third target model exceeds a first threshold; or
a performance indicator of the third target model is a best in the given model library.

For example, the performance indicator of the third target model may be better than the performance indicator of the first target model.

For example, the performance indicator of the third target model may exceed the first threshold.

For example, the performance indicator of the third target model may be the best in the given model library, and simultaneously, the performance indicator of the third target model may exceed the first threshold.

Therefore, the first monitoring end may use the second target model as one of the model performance prediction analysis results, where the model performance prediction analysis result is used for indicating whether to update the first target model, which may achieve active monitoring of the model performance, analyzing the model performance trend, and updating the model in a timely manner when the model performance decreases.

In an embodiment, the method further includes:
determining to update the first target model based on the model association information; and
transmitting the model performance prediction analysis result to the second monitoring end, where the first indication information in the model performance prediction analysis result is used for indicating to update the first target model.

In an embodiment, a first monitoring device may analyze the model association information to determine to update the first target model, and may then transmit the model performance prediction analysis result to the second monitoring end. The first indication information in the model performance prediction analysis result may enable the second monitoring end to perform the operation of updating the first target model.

In an embodiment, the first monitoring device may analyze the model performance information in the model association information. After analyzing and determining that the performance of the first target model is deteriorating or showing a trend of deterioration, it may be determined to update the first target model.

For example, the first monitoring device may analyze the model performance information in the model association information. After analyzing and determining that the model performance information is inferior to the historical model performance information of the first target model before the first time period (such as 48 hours), it may be determined to update the first target model.

For example, the first monitoring device may analyze the model performance information in the model association information. After analyzing and determining that the model performance information does not satisfy the given standard, such as a given threshold, it may be determined to update the first target model.

In an embodiment, the first monitoring device may analyze the model performance information in the model association information, and determine to update the first target model in case that one or more pieces of the model performance information satisfy a fourth given condition.

For example, one or more pieces of the model performance information satisfy the fourth given condition may be that the model accuracy is lower than an accuracy threshold (for example, the model accuracy is 90%, and the accuracy threshold is 95%), or the model accuracy is lower than a historical model accuracy of the first target model. For example, one or more pieces of the model performance information satisfy the fourth given condition may be that the model precision is lower than a precision threshold (for example, the model precision is 85%, and the precision threshold is 90%), or the model precision is lower than a historical model precision of the first target model.

For example, one or more pieces of the model performance information satisfy the fourth given condition may be that the model confidence level is lower than a confidence level threshold, or the model confidence level is lower than a historical model confidence level of the first target model.

For example, one or more pieces of the model performance information satisfy the fourth given condition may be that the model accuracy is lower than the accuracy threshold of the first target model, and the model confidence level is lower than the confidence level threshold of the first target model.

For example, one or more pieces of the model performance information satisfy the fourth given condition may be that the model precision is lower than the historical precision of the first target model, and the model confidence level is lower than the historical model confidence level of the first target model.

It should be noted that the above examples are only for illustrative purposes of the embodiments of the present application and are not intended to limit the scope of the embodiments of the present application.

Therefore, in case of determining to update the first target model, the first monitoring end may transmit the model performance prediction analysis result to the second monitoring end, and then the second monitoring end may perform the operation of updating the first target model, which may achieve active monitoring of the model performance, analyzing the model performance trend, and updating the model in a timely manner when the model performance decreases.

In an embodiment, the method further includes:
transmitting the model performance prediction analysis result to the second monitoring end, where the model performance prediction analysis result is used for indicating the second monitoring end to determine whether to update the first target model.

In an embodiment, the first monitoring end may transmit the model performance prediction analysis result to the second monitoring end, and then the second monitoring end may determine whether to update the first target model.

Therefore, the first monitoring end may transmit the model performance prediction analysis result to the second monitoring end, where the model performance prediction analysis result is used for indicating the second monitoring end whether to update the first target model, which may achieve active monitoring of the model performance, analyzing the model performance trend, and updating the model in a timely manner when the model performance decreases.

In an embodiment, the method further includes:
determining to update the first target model based on the model association information; and
transmitting first request information to a machine learning model training end, where the first request information is used for requesting to retrain the first target model to obtain a fourth target model.

In an embodiment, after obtaining the model association information of the first target model, the first monitoring end may determine to update the first target model based on the model association information, and transmit the first request information to the machine learning model training end, and then the machine learning model training end may retrain the first target model and obtain the fourth target model.

In an embodiment, the first monitoring end may determine whether a retraining trigger condition is satisfied based on the model association information. In case it is determined that the retraining trigger condition is satisfied, the first monitoring end may determine to update the first target model, and transmit the first request information to the machine learning model training end.

In an embodiment, the first monitoring end may obtain the model performance prediction analysis result based on the model association information, and then determine whether the retraining trigger condition is satisfied based on the model performance prediction analysis result. In case it is determined that the retraining trigger condition is satisfied, the first monitoring end may determine to update the first target model and transmit the first request information to the machine learning model training end.

In an embodiment, the first monitoring device may analyze the model performance information in the model performance prediction analysis result. After analyzing and determining that the performance of the first target model is deteriorating or showing a trend of deterioration, it may be determined that the retraining trigger condition is satisfied, the first monitoring end may determine to update the first target model, and transmit the first request information to the machine learning model training end.

For example, the first monitoring device may analyze the model performance information in the model association information. After analyzing and determining that the model performance information is inferior to the historical model performance information of the first target model before the first time period (such as 48 hours), it may be determined that the retraining trigger condition is satisfied, then it is determined to update the first target model, and the first request information is transmitted to the machine learning model training end.

For example, the first monitoring device may analyze the model performance information in the model association information. After analyzing and determining that the model performance information does not satisfy a given standard, such as the given threshold, it may be determined that the retraining trigger condition is satisfied, then it is determined to update the first target model, and the first request information is transmitted to the machine learning model training end.

In an embodiment, the first monitoring device may analyze the model performance information in the model performance prediction analysis result. In case that one or more pieces of the model performance information satisfy the fourth given condition, it is determined that the retraining trigger condition is satisfied, then it is determined to update the first target model, and the first request information is transmitted to the machine learning model training end.

For example, one or more pieces of the model performance information satisfy the fourth given condition may be that the model accuracy is lower than an accuracy threshold (for example, the model accuracy is 90%, and the accuracy threshold is 95%), or the model accuracy is lower than a historical model accuracy of the first target model.

For example, one or more pieces of the model performance information satisfy the fourth given condition may be that the model precision is lower than the precision threshold (for example, the model precision is 85%, and the precision threshold is 90%), or the model precision is lower than a historical precision of the first target model.

For example, one or more pieces of the model performance information satisfy the fourth given condition may be that the model confidence level is lower than the confidence level threshold, or a model confidence level is lower than a historical model confidence level of the first target model.

For example, one or more pieces of the model performance information satisfy the fourth given condition may be that the model accuracy is lower than the accuracy threshold of the first target model, and the model confidence level is lower than the confidence level threshold of the first target model.

For example, one or more pieces of the model performance information satisfy the fourth given condition may be that the model precision is lower than the historical precision of the first target model, and the model confidence level is lower than the historical model confidence level of the first target model.

It should be noted that the above examples are only for illustrative purposes of the embodiments of the present application and are not intended to limit the scope of the embodiments of the present application.

Therefore, in case of determining to update the first target model, the first monitoring end may transmit the first request information to the machine learning model training end, and then the machine learning model training end may retrain the first target model to obtain the fourth target model. The fourth target model may be used to update the model, which may actively monitor the model performance, analyze the model performance trend, and then update the model in a timely manner when the model performance decreases.

In an embodiment, determining to update the first target model includes:
determining a fifth target model used for updating the first target model; and updating the first target model based on the fifth target model.

In an embodiment, the first monitoring end may determine the fifth target model, and then update the first target model based on the fifth target model, which may achieve model update.

Therefore, the fifth target model may be used to update the first target model, enable active monitoring of the model performance, analysis of the model performance trend, and update the model in a timely manner when the model performance decreases.

In an embodiment, determining the fifth target model used for updating the first target model includes:
receiving the fourth target model transmitted from the machine learning model training end; and
in case it is determined that the fourth target model satisfies a third given condition, determining the fourth target model as the fifth target model,
where it is determined that the fourth target model satisfies the third given condition includes any one or more of the following:
   determining that a performance indicator of the fourth target model is better than a performance indicator of the first target model; or
   determining that a performance indicator of the fourth target model exceeds a second threshold.

In an embodiment, the first monitoring end may receive the fourth target model transmitted from the machine learning model training end, and determine whether the fourth target model satisfies the third given condition. In case it is determined that the fourth target model satisfies the third given condition, the fourth target model may be determined as the fifth target model, and the first target model may be updated using the fourth target model.

In an embodiment, the machine learning model training end may retrain the first target model to obtain the fourth target model after receiving the request to retrain the first target model transmitted from the first monitoring end, and then the first monitoring end may receive the fourth target model transmitted from the machine learning model training end.

In an embodiment, the machine learning model training end may retrain the first target model to obtain the fourth target model after receiving the request to retrain the first target model transmitted from the second monitoring end, and then the first monitoring end may receive the fourth target model transmitted from the machine learning model training end.

In an embodiment, the first monitoring end may determine the fourth target model as the fifth target model in case that the performance indicator of the fourth target model is better than the performance indicator of the first target model.

In an embodiment, the first monitoring end may determine the fourth target model as the fifth target model in case that the performance indicator of the fourth target model exceeds the second threshold.

Therefore, the first monitoring end may use the fourth target model to update the first target model, which may actively monitor the model performance, analyze the model performance trend, and update the model in a timely manner when the model performance decreases.

In an embodiment, determining the fifth target model used for updating the first target model includes:
determining the second target model as the fifth target model.

In an embodiment, the first monitoring end may determine the second target model as the fifth target model, and then update the first target model using the second target model.

Therefore, the first monitoring end may use the second target model to update the first target model, which may actively monitor the model performance, analyze the model performance trend, and update the model in a timely manner when the model performance decreases.

FIG. 6 is a second schematic flowchart of a method for model monitoring according to an embodiment of the present application. As shown in FIG. 6, the embodiments of the present application provide a method for model monitoring, performed by a second monitoring end. The method includes:
step 601, receiving a model performance prediction analysis result of a first target model transmitted from a first monitoring end,

The model performance prediction analysis result is used for indicating whether to update the first target model.

In an embodiment, the second monitoring end may receive the model performance prediction analysis result of the first target model transmitted from the first monitoring end, and may then determine whether to update the first target model based on the model performance prediction analysis result.

In an embodiment, the second monitoring end may be an MDAS consumer.

In an embodiment, the second monitoring end may include one consumer, or multiple identical or different consumers.

In an embodiment, the model performance prediction analysis result is used for indicating whether to update the first target model, and the second monitoring end may determine whether to initiate the request to retrain the first target model based on the model performance prediction analysis result. In case that it is determined to initiate the request to retrain the first target model, the request may be initiated to the machine learning model training end, to request it to retrain the first target model. The obtained training result may be used to update the first target model, to actively monitor the model performance, analyze the model performance trend, and initiate model training, where the training result may be used to update the model.

In the method for model monitoring provided by the embodiments of the present application, by obtaining the model performance prediction analysis result, the second monitoring end may determine whether to update the first target model based on the model performance prediction analysis result, which may actively monitor the model performance, analyze the model performance trend, and update the model in a timely manner when the model performance decreases.

In an embodiment, the model performance prediction analysis result includes any one or more of the following:
model association information; or
first indication information used for indicating whether to update the first target model; or
a second target model recommended for updating the first target model.

In an embodiment, the model performance prediction analysis result may include one or more analysis results. After obtaining the model performance prediction analysis result, the second monitoring end may determine whether to update the first target model based on the model performance prediction analysis result.

Therefore, the model performance prediction analysis result may include one or more analysis results. The second monitoring end may determine whether to update the first target model based on the model performance prediction analysis result, which may actively monitor the model performance, analyze the model performance trend, and then update the model in a timely manner when the model performance decreases.

In an embodiment, the method further includes:
determining to update the first target model based on the model association information in the model performance prediction analysis result.

In an embodiment, in case that the model performance prediction analysis result includes the model association information, the second monitoring end may analyze the first target model based on the model association information and determine to update the first target model.

In an embodiment, the second monitoring device may analyze the model performance information in the model association information. After analyzing and determining that the performance of the first target model is deteriorating or showing a trend of deterioration, it may be determined to update the first target model.

For example, the second monitoring device may analyze the model performance information in the model association information. After analyzing and determining that the model performance information is inferior to the historical model performance information of the first target model before the first time period (such as 48 hours), it may be determined to update the first target model.

For example, the second monitoring device may analyze the model performance information in the model association information. After analyzing and determining that the model performance information does not satisfy a given standard, such as a given threshold, it may be determined to update the first target model.

In an embodiment, the second monitoring device may analyze the model performance information in the model association information, and update the first target model in case that one or more pieces of the model performance information satisfy the fourth given condition.

For example, one or more pieces of the model performance information satisfy the fourth given condition may be that the model accuracy is lower than an accuracy threshold (for example, the model accuracy is 90%, and the accuracy threshold is 95%), or the model accuracy is lower than a historical model accuracy of the first target model.

For example, one or more pieces of the model performance information satisfy the fourth given condition may be that the model precision is lower than the precision threshold (for example, the model precision is 85%, and the precision threshold is 90%), or the model precision is lower than a historical model precision of the first target model.

For example, one or more pieces of the model performance information satisfy the fourth given condition may be that the model confidence level is lower than a confidence level threshold, or the model confidence level is lower than a historical model confidence level of the first target model.

For example, one or more pieces of the model performance information satisfy the fourth given condition may be that the model accuracy is lower than the accuracy threshold of the first target model, and the model confidence level is lower than the confidence level threshold of the first target model.

For example, one or more pieces of the model performance information satisfy the fourth given condition may be that the model precision is lower than the historical precision of the first target model, and the model confidence level is lower than the historical model confidence of the first target model.

It should be noted that the above examples are only for illustrative purposes of the embodiments of the present application and are not intended to limit the scope of the embodiments of the present application.

Therefore, the second monitoring end may determine to update the first target model based on the model association information, which may actively monitor the model performance, analyze the model performance trend, and update the model in a timely manner when the model performance decreases.

In an embodiment, after receiving the model performance prediction analysis result of the first target model transmitted from the first monitoring end, the method further includes:
determining to update the first target model based on the first indication information in the model performance prediction analysis result.

In an embodiment, after receiving the model performance prediction analysis result of the first target model, in case that the model performance prediction analysis result includes the first indication information, the second monitoring end may determine to update the first target model based on the first indication information.

Therefore, the second monitoring end may determine to update the first target model based on the first indication information, which may actively monitor the model performance, analyze the model performance trend, and then update the model in a timely manner when the model performance decreases.

In an embodiment, the method further includes:
transmitting a second request information to a machine learning model training end, where the second request information is used for requesting to retrain the first target model to obtain a fourth target model.

In an embodiment, the second monitoring end may transmit the second request information to the machine learning model training end, and then the machine learning model training end may retrain the first target model and obtain the fourth target model.

In an embodiment, the second monitoring end may determine whether the retraining trigger condition is satisfied. In case that it is determined that the retraining trigger condition is satisfied, the second request information may be transmitted to the machine learning model training end to make the machine learning model training end retrain the first target model and obtain the fourth target model.

Therefore, in case of determining to update the first target model, the second monitoring end may transmit the second request information to the machine learning model training end, and then the machine learning model training end may retrain the first target model to obtain the fourth target model, where the fourth target model may be used to update the model, which may actively monitor the model performance, analyze the model performance trend, and then update the model in a timely manner when the model performance decreases.

In an embodiment, determining to update the first target model includes:
determining a fifth target model used for updating the first target model; and
updating the first target model based on the fifth target model.

In an embodiment, the second monitoring end may determine the fifth target model, and then update the first target model based on the fifth target model, which may achieve model update.

Therefore, the fifth target model may be used to update the first target model, enable active monitoring of the model performance, analysis of the model performance trend, and update the model in a timely manner when the model performance decreases.

In an embodiment, determining the fifth target model used for updating the first target model includes:
receiving the fourth target model transmitted from the machine learning model training end; and
in case it is determined that the fourth target model satisfies a third given condition, determining the fourth target model as the fifth target model,
where it is determined that the fourth target model satisfies the third given condition includes any one or more of the following:
   determining that a performance indicator of the fourth target model is better than a performance indicator of the first target model; or
   determining that a performance indicator of the fourth target model exceeds a second threshold.

In an embodiment, the second monitoring end may receive the fourth target model transmitted from the machine learning model training end, and determine whether the fourth target model satisfies the third given condition. In case it is determined that the fourth target model satisfies the third given condition, the fourth target model may be used as the fifth target model, and the first target model may be updated using the fourth target model.

In an embodiment, the machine learning model training end may retrain the first target model to obtain the fourth target model after receiving the request to retrain the first target model transmitted from the first monitoring end, and the second monitoring end may receive the fourth target model transmitted from the machine learning model training end.

In an embodiment, the machine learning model training end may retrain the first target model to obtain the fourth target model after receiving the request to retrain the first target model transmitted from the second monitoring end, and then the second monitoring end may receive the fourth target model transmitted from the machine learning model training end.

In an embodiment, the second monitoring end may use the fourth target model as the fifth target model in case it is determined that the performance indicator of the fourth target model is better than the performance indicator of the first target model.

In an embodiment, the second monitoring end may determine the fourth target model as the fifth target model in case that the performance indicator of the fourth target model exceeds the second threshold.

Therefore, the second monitoring end may use the fourth target model to update the first target model, which may actively monitor the model performance, analyze the model performance trend, and update the model in a timely manner when the model performance decreases.

In an embodiment, determining the fifth target model used for updating the first target model includes:
determining the second target model as the fifth target model.

In an embodiment, the second monitoring end may determine the second target model as the fifth target model, and then update the first target model using the second target model.

Therefore, the second monitoring end may use the second target model to update the first target model, which may actively monitor the model performance, analyze the model performance trend, and update the model in a timely manner when the model performance decreases.

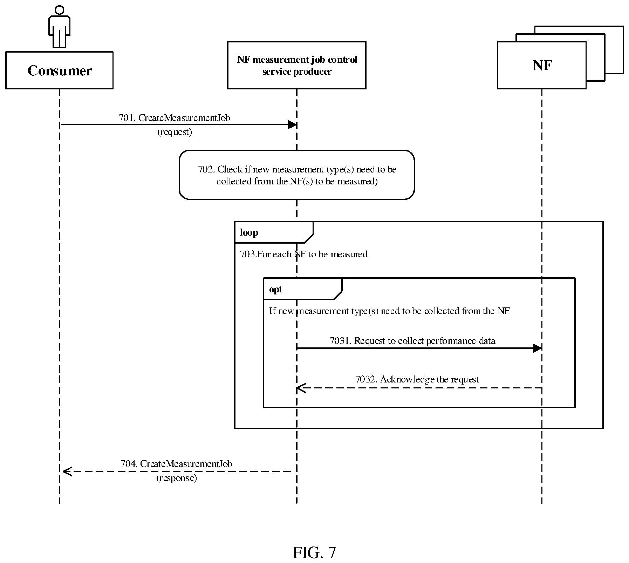

FIG. 7 is a third schematic flowchart of a method for model monitoring according to an embodiment of the present application. FIG. 7 is an optional example of the present application, but does not serve as a limitation of the present application. As shown in FIG. 7, a first monitoring end may act as an authorized consumer and request model association information from a target service. The target service may be an NF measurement job control service producer, and the method may include step 701 to step 704.

Step 701, an authorized consumer may call a CreateMeasurementJob operation to an NF measurement job control service producer to request to create a measurement job for one or more NFs.

Step 702, the NF measurement job control service producer checks whether a new measurement type needs to be collected from the NF to be measured.

In an embodiment, the target network element may be a network functional entity.

In an embodiment, the measurement type may include model performance information and service statistics information.

In an embodiment, the model performance information may include any one or more of the following:
(1) model accuracy, including the number of positive and negative cases correctly predicted by the model and/or the total number of cases correctly predicted by the model; or
(2) model precision, including the number of positive cases correctly predicted by the model and/or the total number of positive cases predicted by the model; or
(3) model recall, including the number of positive cases correctly predicted by the model and/or the actual total number of positive cases predicted by the model; or
(4) Fl score, where an F-value can be a harmonic value of precision and recall, which is closer to the smaller of the precision and recall, and when the precision and recall are close, the F-value is maximum; or
(5) a ROC curve; or
(6) an indicator associated with model operation, such as network bandwidth, memory usage, CPU usage, response latency, etc.; or
(7) a model confidence level; or
(8) a model confidence interval.

In an embodiment, the service statistics information may include any one or more of the following:
(1) a number of model service requests/responses; or
(2) a number of successful subscriptions/subscription failure; or
(3) a number of notifications, etc.; or
(4) a model service request/response time stamp; or
(5) a corresponding duration of a service request.

Step 703, initiating, for each NF to be measured, a performance measurement in case that a new measurement type needs to be collected.

In step 703, step 7031 and step 7032 may be performed continuously, where:
step 7031, NF measurement job control service producer requests the NF to collect the model performance information and the service statistics information; and
step 7032, NF measurement job control service producer receives an acknowledgment of the request from the NF.

It should be noted that for any one NF in any one or more NFs to be measured, step 7031 and step 7032 may be performed.

Step 704, after the measurement job is created, the NF may start measuring and transmit the measurement result to the authorized consumer.

In an embodiment, in case that the target network element is an NSI or an NSSI, the target network element may decompose a measurement requirement into a measurement for model performance information and a measurement for service statistics information.

In an embodiment, the target network element may obtain the model performance information through any one or more of the following modes, and then report the model performance information to the first monitoring end:
(1) a statistical mode based on a cumulative counter; or
(2) a statistical mode based on a dynamic counter; or
(3) a statistical mode based on discrete-event-registration (DER); or
(4) a statistical mode based on state detection.

In an embodiment, the target network element may obtain the service statistics information based on performance statistics data and/or minimum drive testing (MDT), and then report the service statistics information to the first monitoring end.

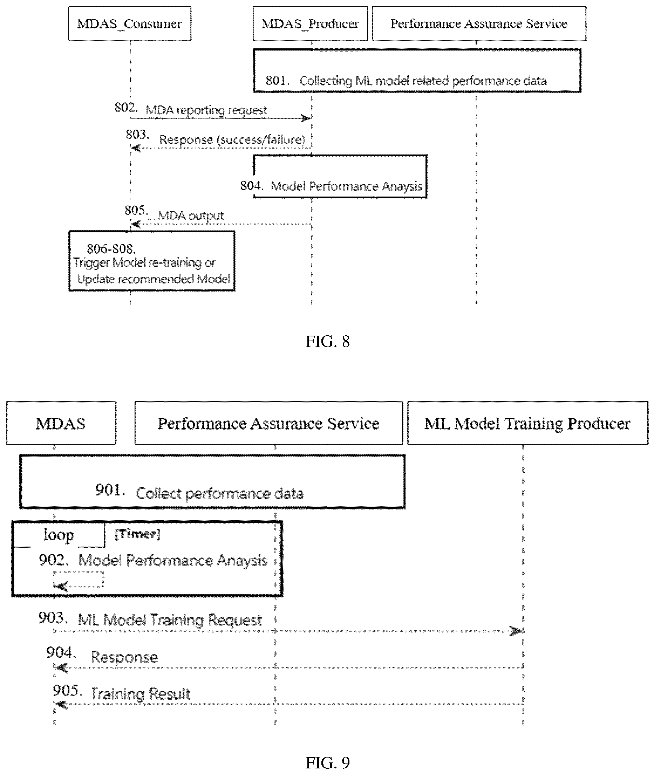

FIG. 8 is a fourth schematic flowchart of a method for model monitoring according to an embodiment of the present application. FIG. 8 is an optional example of the present application, but does not serve as a limitation of the present application. As shown in FIG. 8, the first monitoring end may act as an MDAS producer, and the second monitoring end may act as an MDAS consumer. The MDAS producer requests model association information from a target service, and may then obtain a model performance prediction analysis result based on the model association information. The model performance prediction analysis result may be transmitted to the MDAS consumer, and the method may include step 801 to step 808.

Step 801, an MDAS producer obtains model association information.

In an embodiment, the model association information may include any one or more of the following:
performance information of the target network element; or
service statistics information of the target network element; or
quality of experience (QoE) for user service of the target network element; or
a model association log of the target network element.

In an embodiment, the service statistics information of the target network element may include a KPI.

In an embodiment, the MDAS producer may obtain the model association information from a performance assurance service.

Step 802, the MDAS consumer transmits a model performance analysis request message to the MDAS producer.

In an embodiment, the model performance analysis request message may include any one or more of the following:
a model analysis type; or
a model performance analysis type; or
configuration information of the first target model; or
a geographic location; or
a target analysis object; or
a request identifier; or
a reporting method; or
an identifier (ID) of a function module, used for indicating an ID of a function module where the model is located.

For example, the configuration information of the first target model may include a model name, a model type, creation/end time, a parameter, status, a training data ID, etc.

For example, the reporting method may be any one of the following: a file-based reporting method, a stream-based reporting method, or a notification-based reporting method.

In an embodiment, the MDAS producer determines that the target trigger event occurs may include:
receiving a model performance analysis request message from the MDAS consumer.

Step 803, the MDAS producer transmits an acknowledgment message (Response) to the MDAS consumer.

In an embodiment, the acknowledgment message (Response) may indicate request acknowledgment success or request acknowledgment failure.

Step 804, the MDAS producer obtains the model performance prediction analysis result based on the model association information.

In an embodiment, the model performance prediction analysis result may include any one or more of the following:
model association information; or
first indication information, used for indicating whether to update the first target model; or
a second target model recommended, used for updating the first target model.

Step 805, the MDAS producer transmits the model performance prediction analysis result to the MDAS consumer.

Step 806, in case that the MDAS consumer determines, based on the model performance prediction analysis result, that the retraining trigger condition is satisfied, initiating a model training request to a machine learning model training end (MLMT producer).

Step 807, the MLMT producer transmits request acknowledgment (Response) to the MDAS consumer.

Step 808, after completing training, the MLMT producer transmits a training result (a fourth target model) to the MDAS consumer.

FIG. 9 is a fifth schematic flowchart of a method for model monitoring according to an embodiment of the present application. FIG. 9 is an optional example of the present application, but does not serve as a limitation of the present application. As shown in FIG. 9, the first monitoring end may act as an MDAS, where the MDAS requests model association information from a target service, and may then obtain a model performance prediction analysis result based on the model association information. After determining that the retraining trigger condition is satisfied, the MDAS may initiate a model training request to a machine learning model training end, and the method may include step 901 to step 905.

Step 901, an MDAS obtains model association information.

In an embodiment, the model association information may include any one or more of the following:
performance information of the target network element; or
service statistics information of the target network element; or
quality of experience (QoE) for user service of the target network element; or
a model association log of the target network element.

In an embodiment, the service statistics information of the target network element may include a KPI.

In an embodiment, the MDAS may obtain the model association information from a performance measurement service.

Step 902, the MDAS may obtain, in case of satisfying a first given condition, the model performance prediction analysis result based on the model association information.

In an embodiment, determining that the first given condition is satisfied may be any one of the following:
determining that a first model performance monitoring timer expires; or
determining that there is new training data.

In an embodiment, the model performance prediction analysis result may include any one or more of the following:
model association information; or
first indication information, used for indicating whether to update the first target model; or
a second target model recommended, used for updating the first target model.

Step 903, in case that MDAS determines, based on the model performance prediction analysis result, that the retraining trigger condition is satisfied, initiating a model training request to a machine learning model training end (MLMT producer).

Step 904, the MLMT producer transmits request acknowledgment (Response) to the MDAS.

Step 905, after completing the training, the MLMT producer transmits a training result (a fourth target model) to the MDAS.

The methods and apparatuses provided in each embodiment of the present application are based on the same conception. Since the principles of solving problems by the methods and apparatuses are similar, the implementation of the apparatuses and methods may be referred to each other, and any repetition is not repeated.

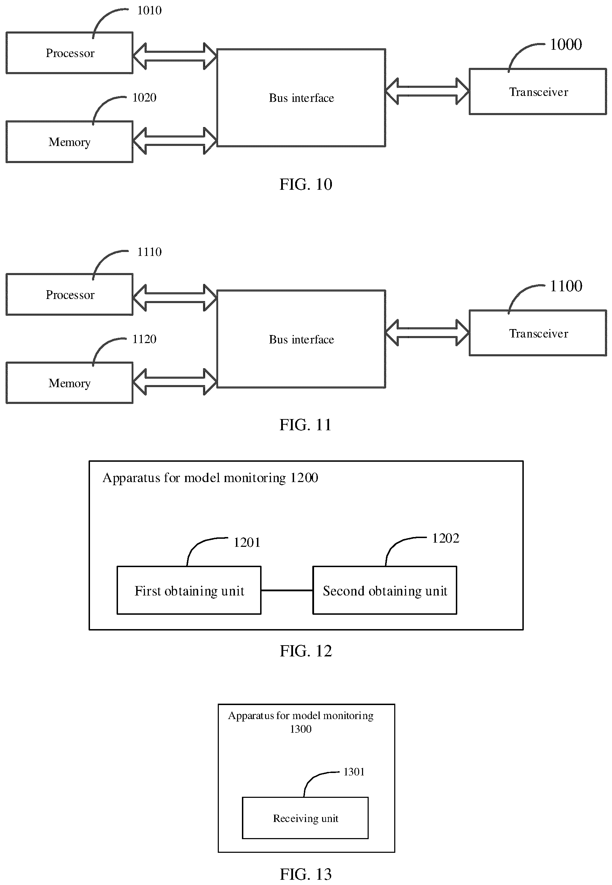

FIG. 10 is a schematic structural diagram of a first monitoring end according to an embodiment of the present application. As shown in FIG. 10, the first monitoring end includes a memory 1020, a transceiver 1000, and a processor 1010, where:
the memory 1020 is used for storing a computer program; the transceiver 1000 is used for transmitting and receiving data under control of the processor 1010; and the processor 1010 is used for reading the computer program from the memory 1020 and performing the following operations:
obtaining model association information of a first target model; and
obtaining a model performance prediction analysis result based on the model association information, where the model performance prediction analysis result is used for indicating whether to update the first target model.

In FIG. 10, a bus architecture may include any number of interconnected buses and bridges, which are linked together through various circuits of one or more processors represented by the processor 1010 and one or more memories represented by the memory 1020. The bus architecture may also link together various other circuits, such as peripherals, voltage regulators, and power management circuits, etc., which are well known in the art, and therefore are not further described in the present application. The bus interface provides an interface. The transceiver 1000 may include multiple elements, i.e., including a transmitter and a receiver, units for providing communication with various other devices over transmission media including wireless channels, wired channels, fiber optic cables, and the like. The processor 1010 is responsible for managing the bus architecture and general processing, and the memory 1020 may store data used by the processor 1010 when performing operations.

In an embodiment, the transceiver 1000 is used for transmitting and receiving data under control of the processor 1010.

The processor 1010 may be a central processing unit (CPU), an application specific integrated circuit (ASIC), a field-programmable gate array (FPGA), or a complex programmable logic device (CPLD), the processor may also use a multi-core architecture.

In an embodiment, the operations further include:
in case of satisfying a first given condition, obtaining the model performance prediction analysis result based on the model association information,
where the first given condition is any one of the following:
   a target trigger event occurs; or
   a first model performance monitoring timer expires; or
   there is a new training data.

In an embodiment, obtaining the model association information of the first target model includes:
collecting the model association information from one or more target network elements, where the target network element is deployed with the first target model.

In an embodiment, obtaining the model association information of the first target model includes:
requesting the model association information from a target service, where the target service is used for collecting the model association information from one or more target network elements, where the target network element is deployed with the first target model.

In an embodiment, the operations further include:
in case of satisfying a second given condition, requesting the model association information from the target service,
where the second given condition is any one of the following:
   a target trigger event occurs; or
   a second model performance monitoring timer expires; or
   there is a new training data; or
   model association information is not in local; or
   historical model association information is not stored in local.

In an embodiment, determining that the target trigger event occurs includes:
receiving a model performance analysis request message transmitted from a second monitoring end,
where the model performance analysis request message includes any one or more of the following:
   a model analysis type; or
   a model performance analysis type; or
   configuration information of the first target model; or
   a geographic location; or
   a target analysis object; or
   a request identifier; or
   a reporting method; or
   an identifier of a function module.

In an embodiment, the model association information includes any one or more of the following:
model performance information of the target network element; or
service statistics information of the target network element; or
quality of experience for user service of the target network element; or
a model association log of the target network element.

In an embodiment, the target network element is any one of the following:
a network functional entity; or
a network slicing instance (NSI); or
a network slicing subnet instance (NSSI); or
a network entity; or
a subnet entity; or
a network management entity.

In an embodiment, the model performance information includes any one or more of the following:
model accuracy; or
model precision; or
model recall; or
a harmonic value of model precision and model recall; or
a receiver operating characteristic (ROC) curve; or
an indicator associated with model operation; or
a model confidence level; or
a model confidence interval.

In an embodiment, the service statistics information includes any one or more of the following:
a number of model service requests; or
a number of model service responses; or
a number of successful subscriptions; or
a number of subscription failure; or
a number of notifications; or
a model service request time stamp; or
a model service response time stamp; or
a corresponding duration of a service request.

In an embodiment, the model performance prediction analysis result includes any one or more of the following:
the model association information; or
first indication information used for indicating whether to update the first target model; or
a second target model recommended for updating the first target model.

In an embodiment, in case that the model performance prediction analysis result includes the second target model, obtaining the model performance prediction analysis result based on the model association information includes:
determining a third target model as the second target model, where the third target model is an item in a given model library.

In an embodiment, the third target model satisfies any one or more of the following:
a performance indicator of the third target model is better than a performance indicator of the first target model; or
a performance indicator of the third target model exceeds a first threshold; or
a performance indicator of the third target model is a best in the given model library.

In an embodiment, the operations further include:
determining to update the first target model based on the model association information; and
transmitting the model performance prediction analysis result to the second monitoring end, where the first indication information in the model performance prediction analysis result is used for indicating to update the first target model.

In an embodiment, the operations further include:
transmitting the model performance prediction analysis result to the second monitoring end, where the model performance prediction analysis result is used for indicating the second monitoring end whether to update the first target model.

In an embodiment, the operations further include:
determining to update the first target model based on the model association information; and
transmitting first request information to a machine learning model training end, where the first request information is used for requesting to retrain the first target model to obtain a fourth target model.

In an embodiment, determining to update the first target model includes:
determining a fifth target model used for updating the first target model; and
updating the first target model based on the fifth target model.

In an embodiment, determining the fifth target model used for updating the first target model includes:
receiving the fourth target model transmitted from the machine learning model training end; and
in case it is determined that the fourth target model satisfies a third given condition, determining the fourth target model as the fifth target model,
where it is determined that the fourth target model satisfies the third given condition includes any one or more of the following:
   determining that a performance indicator of the fourth target model is better than a performance indicator of the first target model; or
   determining that a performance indicator of the fourth target model exceeds a second threshold.

In an embodiment, determining the fifth target model used for updating the first target model includes:
determining the second target model as the fifth target model.

It should be noted that the first monitoring end according to an embodiment of the present application may achieve all the method steps implemented in the method embodiments with the executing subject as the first monitoring end, and may achieve the same technical effect. Therefore, the same parts and beneficial effects as the method embodiment in this embodiment are not elaborated in detail.

FIG. 11 is a schematic structural diagram of a second monitoring end according to an embodiment of the present application. As shown in FIG. 11, the second monitoring end includes a memory 1120, a transceiver 1100, and a processor 1110, where:
the memory 1120 is used for storing a computer program; the transceiver 1100 is used for transmitting and receiving data under control of the processor 1110; and the processor 1110 is used for reading the computer program from the memory 1120 and performing the following operations:
receiving a model performance prediction analysis result of a first target model transmitted from a first monitoring end;
where the model performance prediction analysis result is used for indicating whether to update the first target model.

In an embodiment, the transceiver 1100 is used for transmitting and receiving data under control of the processor 1110.

In FIG. 11, a bus architecture may include any number of interconnected buses and bridges, which are linked together through various circuits of one or more processors represented by the processor 1110 and one or more memories represented by the memory 1120. The bus architecture may also link together various other circuits, such as peripherals, voltage regulators, and power management circuits, etc., which are well known in the art, and therefore are not further described in the present application. The bus interface provides an interface. The transceiver 1100 may include multiple elements, i.e., including a transmitter and a receiver, units for providing communication with various other devices over transmission media including wireless channels, wired channels, fiber optic cables, and the like. The processor 1110 is responsible for managing the bus architecture and general processing, and the memory 1120 may store data used by the processor 1110 when performing operations

The processor 1110 may be a central processing unit (CPU), an application specific integrated circuit (ASIC), a field-programmable gate array (FPGA), or a complex programmable logic device (CPLD), the processor may also use a multi-core architecture.

In an embodiment, the model performance prediction analysis result includes any one or more of the following:
model association information; or
first indication information used for indicating whether to update the first target model; or
a second target model recommended for updating the first target model.

In an embodiment, the operations further include:
determining to update the first target model based on the model association information in the model performance prediction analysis result.

In an embodiment, the operations further include:
determining to update the first target model based on the first indication information in the model performance prediction analysis result.

In an embodiment, the operations further include:
transmitting a second request information to a machine learning model training end, where the second request information is used for requesting to retrain the first target model to obtain a fourth target model.

In an embodiment, determining to update the first target model further includes:
determining a fifth target model used for updating the first target model; and
updating the first target model based on the fifth target model.

In an embodiment, determining the fifth target model used for updating the first target model includes:
receiving the fourth target model transmitted from the machine learning model training end; and
in case it is determined that the fourth target model satisfies a third given condition, determining the fourth target model as the fifth target model,
where it is determined that the fourth target model satisfies the third given condition includes any one or more of the following:
   determining that a performance indicator of the fourth target model is better than a performance indicator of the first target model; or
   determining that a performance indicator of the fourth target model exceeds a second threshold.

In an embodiment, determining the fifth target model used for updating the first target model includes:
determining the second target model as the fifth target model.

It should be noted that the second monitoring end according to an embodiment of the present application may achieve all the method steps and achieve the same technical effect as the method embodiments where the executing subject is the second monitoring end. Therefore, the same parts and beneficial effects as the method implementation example in this embodiment are not elaborated in detail.

FIG. 12 is a first schematic structural diagram of an apparatus for model monitoring according to an embodiment of the present application. As shown in FIG. 12, the apparatus is applied to a first monitoring end, and the apparatus 1200 includes a first obtaining unit 1201 and a second obtaining unit 1202, where:
the first obtaining unit 1201 is used for obtaining model association information of a first target model; and
the second obtaining unit 1202 is used for obtaining a model performance prediction analysis result based on the model association information, where the model performance prediction analysis result is used for indicating whether to update the first target model.

In an embodiment, the apparatus further includes a first determination unit, used for:
in case of satisfying a first given condition, obtaining the model performance prediction analysis result based on the model association information,
where the first given condition is any one of the following:
   a target trigger event occurs; or
   a first model performance monitoring timer expires; or
   there is a new training data.

In an embodiment, the first obtaining unit is further used for:
collecting the model association information from one or more target network elements, where the target network element is deployed with the first target model.

In an embodiment, the first obtaining unit is further used for:
requesting the model association information from a target service, where the target service is used for collecting the model association information from one or more target network elements, where the target network element is deployed with the first target model.

In an embodiment, the apparatus further includes a second determination unit, used for:
in case of satisfying a second given condition, requesting the model association information from the target service,
where the second given condition is any one of the following:
   a target trigger event occurs; or
   a second model performance monitoring timer expires; or
   there is a new training data; or
   model association information is not in local; or
   historical model association information is not stored in local.

In an embodiment, the first determination unit is further used for:
receiving a model performance analysis request message transmitted from a second monitoring end,
where the model performance analysis request message includes any one or more of the following:
   a model analysis type; or
   a model performance analysis type; or
   configuration information of the first target model; or
   a geographic location; or
   a target analysis object; or
   a request identifier; or
   a reporting method; or
   an identifier of a function module.

In an embodiment, the model association information includes any one or more of the following:
model performance information of the target network element; or
service statistics information of the target network element; or
quality of experience for user service of the target network element; or
a model association log of the target network element.

In an embodiment, the target network element is any one of the following:
a network functional entity; or
a network slicing instance (NSI); or
a network slicing subnet instance (NSSI); or
a network entity; or
a subnet entity; or
a network management entity.

In an embodiment, the model performance information includes any one or more of the following:
model accuracy; or
model precision; or
model recall; or
a harmonic value of model precision and model recall; or
a receiver operating characteristic (ROC) curve; or
an indicator associated with model operation; or
a model confidence level; or
a model confidence interval.

In an embodiment, the service statistics information includes any one or more of the following:
a number of model service requests; or
a number of model service responses; or
a number of successful subscriptions; or
a number of subscription failure; or
a number of notifications; or
a model service request time stamp; or
a model service response time stamp; or
a corresponding duration of a service request.

In an embodiment, the model performance prediction analysis result includes any one or more of the following:
the model association information; or
first indication information used for indicating whether to update the first target model; or
a second target model recommended for updating the first target model.

In an embodiment, in case that the model performance prediction analysis result includes the second target model, the second obtaining unit is further used for:
determining a third target model as the second target model, where the third target model is an item in a given model library.

In an embodiment, the third target model satisfies any one or more of the following:
a performance indicator of the third target model is better than a performance indicator of the first target model; or
a performance indicator of the third target model exceeds a first threshold; or
a performance indicator of the third target model is a best in the given model library.

In an embodiment, the apparatus further includes a third determination unit, used for:
determining to update the first target model based on the model association information; and
transmitting the model performance prediction analysis result to the second monitoring end, where the first indication information in the model performance prediction analysis result is used for indicating to update the first target model.

In an embodiment, the apparatus further includes a first transmission unit, used for:
transmitting the model performance prediction analysis result to the second monitoring end, where the model performance prediction analysis result is used for indicating the second monitoring end whether to update the first target model.

In an embodiment, the apparatus further includes a fourth determination unit, used for:
determining to update the first target model based on the model association information; and
transmitting first request information to a machine learning model training end, where the first request information is used for requesting to retrain the first target model to obtain a fourth target model.

In an embodiment, the apparatus further includes a fifth determination unit, used for:
determining a fifth target model used for updating the first target model; and
updating the first target model based on the fifth target model.

In an embodiment, the fifth determination unit is further used for:
receiving the fourth target model transmitted from the machine learning model training end; and
in case it is determined that the fourth target model satisfies a third given condition, determining the fourth target model as the fifth target model,
where it is determined that the fourth target model satisfies the third given condition includes any one or more of the following:
   determining that a performance indicator of the fourth target model is better than a performance indicator of the first target model; or
   determining that a performance indicator of the fourth target model exceeds a second threshold.

In an embodiment, the fifth determination unit is further used for:
determining the second target model as the fifth target model.

FIG. 13 is a second schematic structural diagram of an apparatus for model monitoring according to an embodiment of the present application. As shown in FIG. 13, the apparatus is applied to a second monitoring end, and the apparatus 1300 includes a reception unit 1301, where:
the reception unit 1301 is used for receiving a model performance prediction analysis result of a first target model transmitted from a first monitoring end,
where the model performance prediction analysis result is used for indicating whether to update the first target model.

In an embodiment, the model performance prediction analysis result includes any one or more of the following:
model association information; or
first indication information used for indicating whether to update the first target model; or
a second target model recommended for updating the first target model.

In an embodiment, the apparatus further includes a sixth determination unit, used for:
determining to update the first target model based on the model association information in the model performance prediction analysis result.

In an embodiment, the apparatus further includes a seventh determination unit, used for:
determining to update the first target model based on the first indication information in the model performance prediction analysis result.

In an embodiment, the apparatus further includes a second transmission unit, used for:
transmitting a second request information to a machine learning model training end, where the second request information is used for requesting to retrain the first target model to obtain a fourth target model.

In an embodiment, the apparatus further includes an eighth determination unit, which, after determining to update the first target model, is used for:
determining a fifth target model used for updating the first target model; and
updating the first target model based on the fifth target model.

In an embodiment, the eighth determination unit is further used for:
receiving the fourth target model transmitted from the machine learning model training end; and
in case it is determined that the fourth target model satisfies a third given condition, determining the fourth target model as the fifth target model,
where it is determined that the fourth target model satisfies the third given condition includes any one or more of the following:
   determining that a performance indicator of the fourth target model is better than a performance indicator of the first target model; or
   determining that a performance indicator of the fourth target model exceeds a second threshold.

In an embodiment, the eighth determination unit is further used for:
determining the second target model as the fifth target model.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a flash disk, a mobile hard disk, a read-only memory (ROM), a random access memory (RAM), a magnetic disk, or a compact disk.

It should be noted that the above-mentioned apparatus according to an embodiment of the present application may achieve all the method steps implemented in the above method embodiments, and may achieve the same technical effect. The same parts and beneficial effects as in the method embodiments in this embodiment are not elaborated in detail.

An embodiment of the present application further provides a processor readable storage medium storing a computer program that causes a processor to perform the steps of the method described above, and the method includes:
obtaining model association information of a first target model; and
obtaining a model performance prediction analysis result based on the model association information, where the model performance prediction analysis result is used for indicating whether to update the first target model.

For example, the method includes:
receiving a model performance prediction analysis result of a first target model transmitted from a first monitoring end,
where the model performance prediction analysis result is used for indicating whether to update the first target model.

The processor readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for model monitoring, performed by a first monitoring end, comprising:
obtaining model association information of a first target model; and
obtaining a model performance prediction analysis result based on the model association information, wherein the model performance prediction analysis result is used for indicating whether to update the first target model.

2. The method of claim 1, further comprising:
in case of satisfying a first given condition, obtaining the model performance prediction analysis result based on the model association information,
wherein the first given condition is any one of the following:
a target trigger event occurs; or
a first model performance monitoring timer expires; or
there is a new training data.

3. The method of claim 1, wherein obtaining the model association information of the first target model comprises:
collecting the model association information from one or more target network elements, wherein the target network element is deployed with the first target model.

4. The method of claim 1, wherein obtaining the model association information of the first target model comprises:
requesting the model association information from a target service, wherein the target service is used for collecting the model association information from one or more target network elements, wherein the target network element is deployed with the first target model.

5. The method of claim 4, further comprising:
in case of satisfying a second given condition, requesting the model association information from the target service,
wherein the second given condition is any one of the following:
a target trigger event occurs; or
a second model performance monitoring timer expires; or
there is a new training data; or
model association information is not in local; or
historical model association information is not stored in local.

6. The method of claim 2 or 5, wherein the target trigger event occurring comprises:
receiving a model performance analysis request message transmitted from a second monitoring end,
wherein the model performance analysis request message comprises any one or more of the following:
a model analysis type,; or
a model performance analysis type; or
configuration information of the first target model; or
a geographic location; or
a target analysis object; or
a request identifier; or
a reporting method; or
an identifier of a function module.

7. The method of claim 1, wherein the model association information comprises any one or more of the following:
model performance information of the target network element; or
service statistics information of the target network element; or
quality of experience for user service of the target network element; or
a model association log of the target network element.

8. The method of claim 7, wherein the target network element is any one of the following:
a network functional entity; or
a network slicing instance, NSI; or
a network slicing subnet instance, NSSI; or
a network entity; or
a subnet entity; or
a network management entity.

9. The method of claim 7, wherein the model performance information comprises any one or more of the following:
model accuracy; or
model precision; or
model recall; or
a harmonic value of model precision and model recall; or
a receiver operating characteristic, ROC curve; or
an indicator associated with model operation; or
a model confidence level; or
a model confidence interval.

10. The method of claim 7, wherein the service statistics information comprises any one or more of the following:
a number of model service requests; or
a number of model service responses; or
a number of successful subscriptions; or
a number of subscription failure; or
a number of notifications; or
a model service request time stamp; or
a model service response time stamp; or
a corresponding duration of a service request.

11. The method of claim 1, wherein the model performance prediction analysis result comprises any one or more of the following:
the model association information; or
first indication information used for indicating whether to update the first target model; or
a second target model recommended for updating the first target model.

12. The method of claim 11, wherein in case that the model performance prediction analysis result comprises the second target model, obtaining the model performance prediction analysis result based on the model association information comprises:
determining a third target model as the second target model, wherein the third target model is an item in a given model library.

13. The method of claim 12, wherein the third target model satisfies any one or more of the following:
a performance indicator of the third target model is better than a performance indicator of the first target model; or
a performance indicator of the third target model exceeds a first threshold; or
a performance indicator of the third target model is a best in the given model library.

14. The method of claim 11, further comprising:
determining to update the first target model based on the model association information; and
transmitting the model performance prediction analysis result to the second monitoring end, wherein the first indication information in the model performance prediction analysis result is used for indicating to update the first target model.

15. The method of claim 11, further comprising:
transmitting the model performance prediction analysis result to the second monitoring end, wherein the model performance prediction analysis result is used for indicating the second monitoring end whether to update the first target model.

16. The method of claim 11, further comprising:
determining to update the first target model based on the model association information; and
transmitting first request information to a machine learning model training end, wherein the first request information is used for requesting to retrain the first target model to obtain a fourth target model.

17. The method of claim 14 or 16, wherein determining to update the first target model comprises:
determining a fifth target model used for updating the first target model; and
updating the first target model based on the fifth target model.

18. The method of claim 17, wherein determining the fifth target model used for updating the first target model comprises:
receiving the fourth target model transmitted from the machine learning model training end; and
in case it is determined that the fourth target model satisfies a third given condition, determining the fourth target model as the fifth target model,
wherein it is determined that the fourth target model satisfies the third given condition comprises any one or more of the following:
determining that a performance indicator of the fourth target model is better than a performance indicator of the first target model; or
determining that a performance indicator of the fourth target model exceeds a second threshold.

19. The method of claim 17, wherein determining the fifth target model used for updating the first target model comprises:
determining the second target model as the fifth target model.

20. A method for model monitoring, applied to a second monitoring end, comprising:
receiving a model performance prediction analysis result of a first target model transmitted from a first monitoring end,
wherein the model performance prediction analysis result is used for indicating whether to update the first target model.

21. The method of claim 20, wherein the model performance prediction analysis result comprises any one or more of the following:
model association information; or
first indication information used for indicating whether to update the first target model; or
a second target model recommended for updating the first target model.

22. The method of claim 21, further comprising:
determining to update the first target model based on the model association information in the model performance prediction analysis result.

23. The method of claim 21, further comprising:
determining to update the first target model based on the first indication information in the model performance prediction analysis result.

24. The method of claim 22 or 23, further comprising:
transmitting a second request information to a machine learning model training end, wherein the second request information is used for requesting to retrain the first target model to obtain a fourth target model.

25. The method of claim 22 or 23, wherein determining to update the first target model comprises:
determining a fifth target model used for updating the first target model; and
updating the first target model based on the fifth target model.

26. The method of claim 25, wherein determining the fifth target model used for updating the first target model comprises:
receiving a fourth target model transmitted from the machine learning model training end; and
in case it is determined that the fourth target model satisfies a third given condition, determining the fourth target model as the fifth target model,
wherein it is determined that the fourth target model satisfies the third given condition comprises any one or more of the following:
determining that a performance indicator of the fourth target model is better than a performance indicator of the first target model; or
determining that a performance indicator of the fourth target model exceeds a second threshold.

27. The method of claim 25, wherein determining the fifth target model used for updating the first target model comprises:
determining the second target model as the fifth target model.

28. A first monitoring end, comprising a memory, a transceiver, and a processor, wherein:
the memory is used for storing a computer program; the transceiver is used for transmitting and receiving data under control of the processor; and the processor is used for reading the computer program in the memory and performing the following operations:
obtaining model association information of a first target model; and
obtaining a model performance prediction analysis result based on the model association information, wherein the model performance prediction analysis result is used for indicating whether to update the first target model.

29. The first monitoring end of claim 28, wherein the operations further comprise:
in case of satisfying a first given condition, obtaining the model performance prediction analysis result based on the model association information,
wherein the first given condition is any one of the following:
a target trigger event occurs; or
a first model performance monitoring timer expires; or
there is a new training data.

30. The first monitoring end of claim 28, wherein obtaining the model association information of the first target model comprises:
collecting the model association information from one or more target network elements, wherein the target network element is deployed with the first target model.

31. The first monitoring end of claim 28, wherein obtaining the model association information of the first target model comprises:
requesting the model association information from a target service, wherein the target service is used for collecting the model association information from one or more target network elements, wherein the target network element is deployed with the first target model.

32. The first monitoring end of claim 31, wherein the operations further comprise:
in case of satisfying a second given condition, requesting the model association information from the target service,
wherein the second given condition is any one of the following:
a target trigger event occurs; or
a second model performance monitoring timer expires; or
there is a new training data; or
model association information is not in local; or
historical model association information is not stored in local.

33. The first monitoring end of claim 29 or 32, wherein the target trigger event occurring comprises:
receiving a model performance analysis request message transmitted from a second monitoring end,
wherein the model performance analysis request message comprises any one or more of the following:
a model analysis type; or
a model performance analysis type; or
configuration information of the first target model; or
a geographic location; or
a target analysis object; or
a request identifier; or
a reporting method; or
an identifier of a function module.

34. The first monitoring end of claim 28, wherein the model association information comprises any one or more of the following:
model performance information of the target network element; or
service statistics information of the target network element; or
quality of experience for user service of the target network element; or
a model association log of the target network element.

35. The first monitoring end of claim 34, wherein the target network element is any one of the following:
a network functional entity; or
a network slicing instance, NSI; or
a network slicing subnet instance, NSSI; or
a network entity; or
a subnet entity; or
a network management entity.

36. The first monitoring end of claim 34, wherein the model performance information comprises any one or more of the following:
model accuracy; or
model precision; or
model recall; or
a harmonic value of model precision and model recall; or
a receiver operating characteristic, ROC curve; or
an indicator associated with model operation; or
a model confidence level; or
a model confidence interval.

37. The first monitoring end of claim 34, wherein the service statistics information comprises any one or more of the following:
a number of model service requests; or
a number of model service responses; or
a number of successful subscriptions; or
a number of subscription failure; or
a number of notifications; or
a model service request time stamp; or
a model service response time stamp; or
a corresponding duration of a service request.

38. The first monitoring end of claim 28, wherein the model performance prediction analysis result comprises any one or more of the following:
the model association information; or
first indication information used for indicating whether to update the first target model; or
a second target model recommended for updating the first target model.

39. The first monitoring end of claim 38, wherein in case that the model performance prediction analysis result comprises the second target model, obtaining the model performance prediction analysis result based on the model association information comprises:
determining a third target model as the second target model, wherein the third target model is an item in a given model library.

40. The first monitoring end of claim 39, wherein the third target model satisfies any one or more of the following:
a performance indicator of the third target model is better than a performance indicator of the first target model; or
a performance indicator of the third target model exceeds a first threshold; or
a performance indicator of the third target model is a best in the given model library.

41. The first monitoring end of claim 38, wherein the operations further comprise:
determining to update the first target model based on the model association information; and
transmitting the model performance prediction analysis result to the second monitoring end, wherein the first indication information in the model performance prediction analysis result is used for indicating to update the first target model.

42. The first monitoring end of claim 38, wherein the operations further comprise:
transmitting the model performance prediction analysis result to the second monitoring end, wherein the model performance prediction analysis result is used for indicating the second monitoring end whether to update the first target model.

43. The first monitoring end of claim 38, wherein after obtaining the model association information of the first target model, the operations further comprise:
determining to update the first target model based on the model association information; and
transmitting first request information to a machine learning model training end, wherein the first request information is used for requesting to retrain the first target model to obtain a fourth target model.

44. The first monitoring end of claim 41 or 43, wherein determining to update the first target model comprises:
determining a fifth target model used for updating the first target model; and
updating the first target model based on the fifth target model.

45. The first monitoring end of claim 44, wherein determining the fifth target model used for updating the first target model comprises:
receiving the fourth target model transmitted from the machine learning model training end; and
in case it is determined that the fourth target model satisfies a third given condition, determining the fourth target model as the fifth target model,
wherein it is determined that the fourth target model satisfies the third given condition comprises any one or more of the following:
determining that a performance indicator of the fourth target model is better than a performance indicator of the first target model; or
determining that a performance indicator of the fourth target model exceeds a second threshold.

46. The first monitoring end of claim 44, wherein determining the fifth target model used for updating the first target model comprises:
determining the second target model as the fifth target model.

47. A second monitoring end, comprising a memory, a transceiver, and a processor, wherein:
the memory is used for storing a computer program; the transceiver is used for transmitting and receiving data under control of the processor; and the processor is used for reading the computer program in the memory and performing the following operations:
receiving a model performance prediction analysis result of a first target model transmitted from a first monitoring end,
wherein the model performance prediction analysis result is used for indicating whether to update the first target model.

48. The second monitoring end of claim 47, wherein the model performance prediction analysis result comprises any one or more of the following:
model association information; or
first indication information used for indicating whether to update the first target model; or
a second target model recommended for updating the first target model.

49. The second monitoring end of claim 48, wherein the operations further comprise:
determining to update the first target model based on the model association information in the model performance prediction analysis result.

50. The second monitoring end of claim 48, wherein the operations further comprise:
determining to update the first target model based on the first indication information in the model performance prediction analysis result.

51. The second monitoring end of claim 49 or 50, wherein the operations further comprise:
transmitting a second request information to a machine learning model training end, wherein the second request information is used for requesting to retrain the first target model to obtain a fourth target model.

52. The second monitoring end of claim 49 or 50, wherein determining to update the first target model comprises:
determining a fifth target model used for updating the first target model; and
updating the first target model based on the fifth target model.

53. The second monitoring end of claim 52, wherein determining the fifth target model used for updating the first target model comprises:
receiving the fourth target model transmitted from the machine learning model training end; and
in case it is determined that the fourth target model satisfies a third given condition, determining the fourth target model as the fifth target model,
wherein it is determined that the fourth target model satisfies the third given condition comprises any one or more of the following:
determining that a performance indicator of the fourth target model is better than a performance indicator of the first target model; or
determining that a performance indicator of the fourth target model exceeds a second threshold.

54. The second monitoring end of claim 52, wherein determining the fifth target model used for updating the first target model comprises:
determining the second target model as the fifth target model.

55. An apparatus for model monitoring, applied to a first monitoring end, comprising:
a first obtaining unit, used for obtaining model association information of a first target model;
a second obtaining unit, used for obtaining a model performance prediction analysis result based on the model association information, wherein the model performance prediction analysis result is used for indicating whether to update the first target model.

56. The apparatus of claim 55, wherein the apparatus further comprises a first determination unit, wherein the first determination unit is used for:
in case of satisfying a first given condition, obtaining the model performance prediction analysis result based on the model association information,
wherein the first given condition is any one of the following:
a target trigger event occurs; or
a first model performance monitoring timer expires; or
there is a new training data.

57. The apparatus of claim 55, wherein the first obtaining unit is used for:
collecting the model association information from one or more target network elements, wherein the target network element is deployed with the first target model.

58. The apparatus of claim 55, wherein the first obtaining unit is used for:
requesting the model association information from a target service, wherein the target service is used for collecting the model association information from one or more target network elements, wherein the target network element is deployed with the first target model.

59. The apparatus of claim 58, wherein the apparatus further comprises a second determination unit, wherein the second determination unit is used for:
in case of satisfying a second given condition, requesting the model association information from the target service,
wherein the second given condition is any one of the following:
a target trigger event occurs; or
a second model performance monitoring timer expires; or
there is a new training data; or
model association information is not in local; or
historical model association information is not stored in local.

60. The apparatus of claims 56 or 59, wherein the first determination unit is used for:
receiving a model performance analysis request message transmitted from a second monitoring end,
wherein the model performance analysis request message comprises any one or more of the following:
a model analysis type; or
a model performance analysis type; or
configuration information of the first target model; or
a geographic location; or
a target analysis object; or
a request identifier; or
a reporting method; or
an identifier of a function module.

61. The apparatus of claim 55, wherein the model association information comprises any one or more of the following:
model performance information of the target network element; or
service statistics information of the target network element; or
quality of experience for user service of the target network element; or
a model association log of the target network element.

62. The apparatus of claim 61, wherein the target network element is any one of the following:
a network functional entity; or
a network slicing instance, NSI; or
a network slicing subnet instance, NSSI; or
a network entity; or
a subnet entity; or
a network management entity.

63. The apparatus of claim 61, wherein the model performance information comprises any one or more of the following:
model accuracy; or
model precision; or
model recall; or
a harmonic value of model precision and model recall; or
a receiver operating characteristic, ROC curve; or
an indicator associated with model operation; or
a model confidence level; or
a model confidence interval.

64. The apparatus of claim 61, wherein the service statistics information comprises any one or more of the following:
a number of model service requests; or
a number of model service responses; or
a number of successful subscriptions; or
a number of subscription failure; or
a number of notifications; or
a model service request time stamp; or
a model service response time stamp; or
a corresponding duration of a service request.

65. The apparatus of claim 55, wherein the model performance prediction analysis result comprises any one or more of the following:
the model association information; or
first indication information used for indicating whether to update the first target model; or
a second target model recommended for updating the first target model.

66. The apparatus of claim 65, wherein in case that the model performance prediction analysis result comprises the second target model, the second obtaining unit is used for:
determining a third target model as the second target model, wherein the third target model is an item in a given model library.

67. The apparatus of claim 66, wherein the third target model satisfies any one or more of the following:
a performance indicator of the third target model is better than a performance indicator of the first target model; or
a performance indicator of the third target model exceeds a first threshold; or
a performance indicator of the third target model is a best in the given model library.

68. The apparatus of claim 65, wherein the apparatus further comprises a third determination unit, wherein the third determination unit is used for:
determining to update the first target model based on the model association information; and
transmitting the model performance prediction analysis result to the second monitoring end, wherein the first indication information in the model performance prediction analysis result is used for indicating to update the first target model.

69. The apparatus of claim 65, wherein the apparatus further comprises a first transmission unit, wherein the first transmission unit is used for:
transmitting the model performance prediction analysis result to the second monitoring end, wherein the model performance prediction analysis result is used for indicating the second monitoring end whether to update the first target model.

70. The apparatus of claim 65, wherein the apparatus further comprises a fourth determination unit, wherein the fourth determination unit is used for:
determining to update the first target model based on the model association information; and
transmitting first request information to a machine learning model training end, wherein the first request information is used for requesting to retrain the first target model to obtain a fourth target model.

71. The apparatus of claim 68 or 70, wherein the apparatus further comprises a fifth determination unit, wherein the fifth determination unit is used for:
determining a fifth target model used for updating the first target model; and
updating the first target model based on the fifth target model.

72. The apparatus of claim 71, wherein the fifth determination unit is used for:
receiving the fourth target model transmitted from the machine learning model training end; and
in case it is determined that the fourth target model satisfies a third given condition, determining the fourth target model as the fifth target model,
wherein it is determined that the fourth target model satisfies the third given condition comprises any one or more of the following:
determining that a performance indicator of the fourth target model is better than a performance indicator of the first target model; or
determining that a performance indicator of the fourth target model exceeds a second threshold.

73. The apparatus of claim 71, wherein the fifth determination unit is used for:
determining the second target model as the fifth target model.

74. An apparatus for model monitoring, applied to a second monitoring end, comprising:
a reception unit, used for receiving a model performance prediction analysis result of a first target model transmitted from a first monitoring end,
wherein the model performance prediction analysis result is used for indicating whether to update the first target model.

75. The apparatus of claim 74, wherein the model performance prediction analysis result comprises any one or more of the following:
model association information; or
first indication information used for indicating whether to update the first target model; or
a second target model recommended for updating the first target model.

76. The apparatus of claim 75, wherein the apparatus further comprises a sixth determination unit, wherein the sixth determination unit is used for:
determining to update the first target model based on the model association information in the model performance prediction analysis result.

77. The apparatus of claim 75, wherein the apparatus further comprises a seventh determination unit, wherein the seventh determination unit is used for:
determining to update the first target model based on the first indication information in the model performance prediction analysis result.

78. The apparatus of claim 76 or 77, wherein the apparatus further comprises a second transmission unit for:
transmitting a second request information to a machine learning model training end, wherein the second request information is used for requesting to retrain the first target model to obtain a fourth target model.

79. The apparatus of claim 76 or 77, wherein the apparatus further comprises an eighth determination unit, wherein the eighth determination unit is used for:
determining a fifth target model used for updating the first target model; and
updating the first target model based on the fifth target model.

80. The apparatus of claim 79, wherein the eighth determination unit is used for:
receiving the fourth target model transmitted from the machine learning model training end; and
in case it is determined that the fourth target model satisfies a third given condition, determining the fourth target model as the fifth target model,
wherein it is determined that the fourth target model satisfies the third given condition comprises any one or more of the following:
determining that a performance indicator of the fourth target model is better than a performance indicator of the first target model; or
determining that a performance indicator of the fourth target model exceeds a second threshold.

81. The apparatus of claim 79, wherein the eighth determination unit is used for:
determining the second target model as the fifth target model.

82. A processor-readable storage medium, wherein the processor-readable storage medium stores a computer program for causing a processor to perform the method of any one of claims 1 to 19, or the method of any one of claims 20 to 27.
